# EUROPEAN PATENT SPECIFICATION

(11) **EP 4 015 787 B1**
(45) Date of publication and mention of the grant of the patent: **24.01.2024**
(21) Application number: 20214913.4
(22) Date of filing: 17.12.2020
(51) Int. Cl.: F01L 13/06, F02D 13/02, F02D 41/00, F01L 9/11

(54) **INTERNAL COMBUSTION ENGINE WITH FAST COMBUSTION, AND METHOD FOR CONTROLLING THE ENGINE**
BRENNKRAFTMASCHINE MIT SCHNELLER VERBRENNUNG UND VERFAHREN ZUR STEUERUNG DER MASCHINE
MOTEUR À COMBUSTION INTERNE ET RAPIDE ET PROCÉDÉ DE COMMANDE DU MOTEUR

(43) Date of publication of application: 22.06.2022
(73) Proprietor: C.R.F. Società Consortile per Azioni, 10043 Orbassano (Torino) (IT)
(72) Inventor: RICCO, Raffaele, 10043 Orbassano (Torino) (IT); STUCCHI, Sergio, 10043 Orbassano (Torino) (IT); GARGANO, Marcello, 10043 Orbassano (Torino) (IT); MAZZARELLA, Carlo, 10043 Orbassano (Torino) (IT); LEPORE, Domenico, 10043 Orbassano (Torino) (IT)
(74) Representative: Notaro, Giancarlo

(56) References cited:
- EP-A1- 1 555 398
- EP-A1- 2 693 007
- EP-A1- 2 796 675
- EP-A1- 2 801 706
- EP-A1- 3 181 842
- EP-B1- 0 803 642
- EP-B1- 1 508 676
- EP-B1- 1 555 398
- US-B1- 6 725 828

## Description

### Field of the invention

The present invention relates to internal combustion engines and methods for controlling operation thereof.

### Prior art

Increasingly strict rules in relation to CO₂ and particulate emissions in gasoline and diesel internal combustion engines are encouraging designers towards ever larger use of a number of technologies (such as high compression ratio engines, engines operating according to the Miller - Atkinson cycle, dilution of the air-gasoline mixture with cooled exhaust gas recirculation, direct injection of high pressure fuel, deactivation of one or more engine cylinders) which however introduce new problems with regard to maximum power, fuel consumption and homogeneity of the air-gasoline mixture.

In view of overcoming these drawbacks, it has been also proposed to use engine intake conduits and/or intake valves configured so as to impart predetermined characteristics to the airflow which enters into each cylinder, in order to improve mixing and/or accelerate combustion and/or avoid or reduce any process which may be detrimental to the engine efficiency.

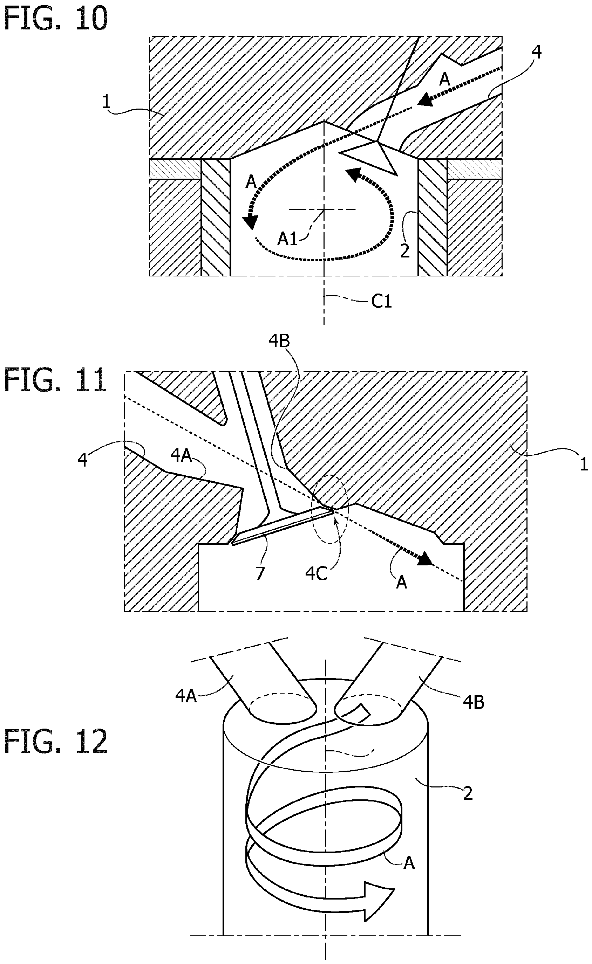

A first old and well-known solution is that of imparting a tumble motion to the airflow, i.e. a vortex motion around an axis orthogonal to the cylinder axis. For this purpose, the intake conduit is configured so that when the intake valve associated thereto is opened, the airflow entering into the cylinder is almost entirely conveyed on one side of the intake valve and gives rise to a tumble vortex, rotating in one and same direction around an axis orthogonal to the cylinder axis. An example of an intake conduit configured for generating a tumble motion is shown in figures 10, 11 of the annexed drawings, which will be described in the following. In order to obtain, or increase, a tumble effect, it is also known to provide masked intake valves, i.e. valves provided with a shield-shaped projecting portion, which favours the inlet of the airflow into the cylinder of the engine along a desired direction.

However, it has been found that adopting intake valves with a high tumble ratio (the tumble ratio is defined as the ratio between the speed of rotation of the airflow within the cylinder and the rotational speed of the engine) and/or adopting masked intake valves cause the drawback of reducing the filling coefficient of the cylinder (i.e. the quantity of air which enters into the cylinder) with a resulting decrease of the engine power.

It has also been proposed in the past to impart a swirl motion to the airflow entering into the cylinder, i.e. a spiral-like motion around the axis of the cylinder, through the adoption of a corresponding configuration and a suitable orientation of the intake conduits. This technique is particularly advantageous in the case of gasoline direct injection engines, where there is a problem due to impingement of the fuel jet against the cylinder wall, particularly at low temperatures, with a resulting reduced evaporation of the gasoline. This problem increases at higher engine loads, when a higher quantity of fuel must be introduced into the cylinder. Adopting a swirl motion for the airflow which enters into the cylinder is useful, since the fuel jet is intercepted by the air vortex and is not able to hit the cylinder wall.

In order to maximize the advantages of the two above mentioned technologies (tumble and swirl) it has been also proposed (see for example US Re 42,667) to provide, for each cylinder, two intake valves with respective intake conduits which are configured so that one of them generates a tumble motion, while the other generates a swirl motion.

In particular, in the solution disclosed in the above cited document US Re 42,667, it has been proposed to provide an activation only of the intake valve associated to the intake conduit which generates the swirl motion in a condition of reduced operation of the engine (i.e. at low engine loads and/or low engine rotational speeds) and to activate both the intake valves, or only the intake valve associated to the intake conduit which generates a tumble motion, in the remaining operational conditions of the engine.

Naturally, the need of controlling the two intake valves in a differentiated manner implies in general, in the known solutions of the type indicated above, the use of separate actuating systems. For example, in the case of the solution known from document US Re 42,667, two separate electromagnets are provided for actuating the two intake valves associated to each cylinder. However, this solution implies various drawbacks. In modern engines, particularly in supercharged engines, the load of the springs which bias the intake valves towards their closed position is very high. As a consequence of this, the above described known art implies the use of very powerful electromagnets which imply very high electric currents and greatly increase frictions. Furthermore, the electromagnets have an on/off operation, so that the intake valves are always either completely closed or completely opened, without any possibility to impart a partial lift thereto.

Therefore, the need is felt of a system for actuating the intake valves of the engine which is able to better satisfy the above indicated requirements.

Since a long time, the Applicant has been developing internal combustion engines comprising a system for variable actuation of the intake valves, which is marketed under the trademark "*Multiair*", having a high degree of operational flexibility. See for example EP 0 803 642 B1, EP 1 555 398, EP 1 508 676 B1, EP 1 674 673 B1 and EP 2 261 471 A1, EP 2 693 007 A1, EP 2 801 706 A1, all in the name of the same Applicant.

According to this known art developed by the Applicant (see for example EP 2 801 706 A1) an internal combustion engine is provided, comprising, for each cylinder:
- a combustion chamber,
- first and second intake conduits and at least one exhaust conduit opening on said combustion chamber,
- first and second intake valves associated to said first and second intake conduits respectively and at least one exhaust valve associated to said at least one exhaust conduit, said intake and exhaust valves being provided with respective return springs which bias them towards a closed position,
- a camshaft for actuating the intake valves, by means of respective tappets,
- wherein each intake valve is driven by a respective tappet against the action of said return spring with the interposition of a hydraulic circuit including a volume of a fluid under pressure towards which a pumping piston associated to the valve tappet is facing, said volume of fluid under pressure being adapted to communicate with a chamber of a hydraulic actuator associated to said intake valve,
- each intake valve being associated to at least one electrically operated control valve adapted to communicate said volume of fluid under pressure with a low pressure discharge channel (a discharge channel), in order to uncouple said intake valve from the respective tappet and cause a quick closing of said intake valve due to the bias of the respective return spring,
- at least one electronic controller, for controlling said at least one control valve, for varying the opening and/or closing time and the lift of each intake valve as a function of one or more operational parameters of the engine.

The present invention has been developed starting from considering that the above described "*Multiair*" technology results to be surprisingly advantageous for the purpose of solving the technical problems which have been discussed in the foregoing.

An internal combustion engine according to the preamble of claim 1 is known from Applicant's documents EP 2 796 675 A1 or EP 0 803 642 B1.

An engine is also known from US 6 25 828 B1 having two intake ducts for each cylinder, which, in addition to their respective intake valves, are provided with swirl control valves to generate primarily swirl flow with some tumble and cross-tumble flows.

### Object of the invention

A first object of the present invention is that of providing an internal combustion engine which is able to overcome all the drawbacks of the above described known solutions, so as to satisfy the ever stricter rules with regard to CO₂ and particulate emissions on one hand, and to be not jeopardized from the power and consumption stand point, on the other hand.

A further particular object of the invention is that of reaching the above indicated goal by imparting a type of motion to the airflow which enters into the cylinder which results to be the best solution in order to increase the speed of combustion within the cylinder, particularly at low engine loads.

A further particular object of the invention is that of reaching the above indicated goal by providing a system for actuating the intake valves which does not involve the drawbacks of the above mentioned known solutions.

Finally, a further object of the invention is that of achieving the above indicated goals with the use of a system for actuating the intake valves which is relatively simple and inexpensive and such as to provide a high operational flexibility.

### Summary of the invention

The invention provides an internal combustion engine having all the features of claim 1.

Studies and tests of the Applicant have shown that the solution according to the invention provides a high Turbulent Kinetic Energy (TKE) within the combustion chamber. A higher TKE value means a faster propagation of the combustion.

In a first embodiment, it is provided that the two intake valves of each cylinder are controlled by a single cam of said camshaft through a single hydraulic circuit and that the communication of the hydraulic actuators of the two intake valves with said discharge channel is controlled by a single electrically operated control valve having three ways and three positions. This specific embodiment of the control valve is known per se and has been disclosed for example in document EP 2 801 706 A1 of the same Applicant. However, this known component is used herein for the first time in order to control tumble and swirl motions according to the new operational modes which have been indicated in the foregoing.

According to this embodiment, the three-way/three-position control valve comprises:
- an inlet which permanently communicates with said volume of fluid under pressure and with the actuator of said first intake valve, and
- two outlets respectively communicating with the actuator of the second intake valve and with said discharge channel,
said control valve having the following three operative positions:
- a first position, in which the inlet communicates with both the outlets, so that the volume of fluid under pressure and the actuators of both the intake valves are put to discharge and the intake valves are both kept closed by their return springs,
- a second position, in which the inlet communicates only with the outlet connected to the actuator of the second intake valve and does not communicate instead with the outlet connected to the discharge channel, so that the volume of a fluid under pressure is insulated with respect to the discharge channel and the actuators of both the intake valves communicate with the volume of fluid under pressure, so that the intake valves are both active, and
- a third position, in which the inlet does not communicate with any of the two outlets, so that said volume of fluid under pressure is insulated with respect to the discharge channel and said first intake valve is active, whereas the second intake valve is insulated with respect to the volume of fluid under pressure and with respect to the discharge channel and it is not in conditions to be opened.

According to the second embodiment, the two intake valves of each cylinder are controlled by a single cam of said camshaft through a single hydraulic circuit and a communication of the hydraulic actuators of the two intake valves with said discharge channel is controlled by means of two electrically operated control valves, both of an on/off and two positions type, which are arranged in series relative to each other along a hydraulic line for communication between the volume of fluid under pressure and the discharge channel. Said communication hydraulic line includes, starting from said volume of fluid under pressure towards said discharge channel:
- a first branch-off point connected to the hydraulic actuator of said first intake valve, associated to said first intake conduit which is configured for generating a tumble motion,
- a second branch-off point connected to the hydraulic actuator of said second intake valve, associated to said second intake conduit which is configured for generating a swirl motion.

A first of said control valves is arranged between said second branch-off point and the discharge channel, so that when said first control valve is closed, the communication with the discharge channel is interrupted for both the hydraulic actuators of the intake valves.

A second control valve is arranged in said communication line between the two above mentioned branch-off points, so that when said second control valve is closed:
- the actuator of the first intake valve is always in communication with the volume of fluid under pressure, whereas its communication with the discharge channel is anyway interrupted, independently from the condition of operation of the first control valve,
- the actuator of the second intake valve does no longer communicates with the volume of fluid under pressure, independently from the conditional operation of the first control valve.

It is also possible to adopt a different embodiment which is not however the preferred embodiment from the point of view of simplicity of manufacture and reduction of production costs, in which different cams are provided for operating the two intake valves of each cylinder, respectively. To these two cams, there are associated two tappets and two separate hydraulic circuits, including two respective electrically operated control valves, each for controlling the communication of the hydraulic actuator of the respective intake valve with the low pressure discharge channel.

In all the above mentioned embodiments, it is also possible to provide, by way of example, that the intake valve associated to the intake conduit which generates the tumble motion has always conventional lift cycles or, advantageously, cycles in which the valve lift is greater than the conventional lift (up to a maximum of double lift) whereas the other intake valve which is associated to the intake conduit which generates the swirl motion is kept closed or is opened only partially, according to different operational modes.

A greater opening lift with respect to the conventional lift (by conventional lift the case is meant in which both the valves are opened with a lift variation corresponding to the cam profile) enables an increase in the dynamic conditions of the air entering into the combustion chamber, to advantage for the turbulence of the air fuel mixture being formed.

In particular, the electronic controller may be configured and programmed for controlling the above mentioned at least one control valve so that, at least in one intermediate conditional operation of the engine, above said condition of reduced operation, the second intake valve is controlled according to a partial lift mode, in which it has a lift movement smaller with respect to its maximum lift.

In one example, the electronic controller can be configured and programmed so that in the above mentioned partial lift mode, the second intake valve remains in a fixed position, corresponding to a predetermined partial lift, during its opening cycle.

Alternatively, the electronic controller can be configured and programmed so that in said partial lift mode, said second intake valve is controlled according to a late opening mode, in which it is opened with a delay with respect to the starting time of the lift cycle caused by the profile of the respective actuating cam.

In particular, the above mentioned electronic controller can be configured and programmed so that in the above mentioned late opening mode, said second intake valve is again closed together with the first intake valve, at the end of the lift cycle determined by the profile of the respective actuating cam.

Alternatively, the electronic controller may be configured and programmed so that in said partial lift mode of the second intake valve, the latter is controlled according to a multi-lift mode, in which it is opened partially and then completely closed again more times during a same lift cycle of the respective actuating cam.

Yet according to an alternative solution, the electronic controller is configured and programmed so that in said partial lift mode of the second intake valve, the latter is controlled according to a late closing mode, in which it is opened partially together with the first intake valve and then closed completely with a delay with respect to the end of a lift cycle of the respective actuating cam.

Finally, the electronic controller may be configured and programmed for postponing opening of the valves, both when they are actuated simultaneously, and when only one of them is opened, with respect to the position of the piston corresponding to the Top Dead Centre TDC, so as to exploit the speed of the piston during the intake stage for further increasing the turbulence in the combustion chamber.

The different actuating modes of the intake valves which have been mentioned above will be described in detail in the following. However, they represent only examples of use of the system according to the invention.

The invention also provides the method for controlling the engine.

### Description of some embodiments of the invention

Further features and advantages of the invention will become apparent from the description which follows with reference to the annexed drawings, given purely by way of non limiting example, in which:
- figure 1 shows a cross-sectional view of the cylinder head of an internal combustion engine provided with a multi-air (registered trademark) system for variable actuation of the intake valves, according to what is illustrated in document EP 0 803 642 B1,
- figures 2, 3 show the control system for two intake valves associated to a same cylinder of the engine, in a multi-air system of the conventional type described for example in EP 2 261 471 A1,
- figures 4-6 show a diagram of the control system for the two intake valves, in the embodiment which makes use of a single 3-way 3-position control valve, according to what is described in document EP 2 801 706 A1 of the same Applicant,
- figures 7-9 are diagrams which show standard modes of operation of the two intake valves which can be obtained with the activation system of figures 4-6,
- figure 10 diagrammatically shows a tumble motion of the air flow introduced into a cylinder of the engine,
- figure 11 shows an exemplary configuration of an intake conduit of known type which is used for give rise to the above mentioned tumble motion, with the further aid due to the presence of a masking of the intake valve,
- figure 12 is a diagrammatic perspective view which shows a swirl motion of the airflow introduced into the cylinder,
- figure 13 shows diagrams corresponding to different modes of operation of the intake valves in a first embodiment of the invention in which a system for actuation of the intake valves of the type shown in figures 4-6 is used in combination with the adoption of intake conduits associated to the two intake valves of each cylinder which are configured for generating a tumble motion and a swirl motion, respectively,
- figure 14 shows a new embodiment for an electronic hydraulic actuation system for the intake valves of the engine which can be advantageously used in a second embodiment of the present invention in order to control the two intake valves of each cylinder associated to the two intake conduits which are configured for generating the tumble motion and the swirl motion respectively,

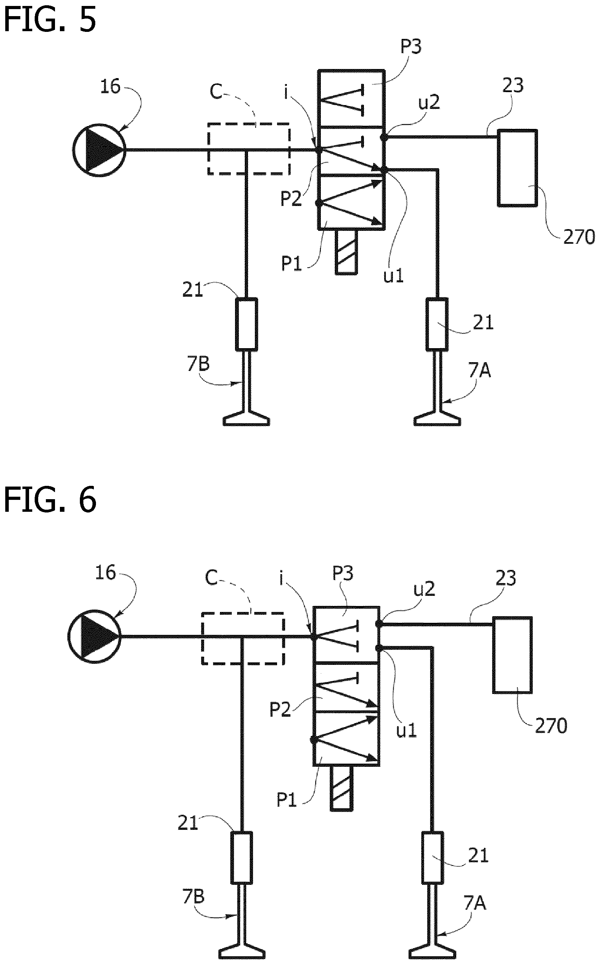

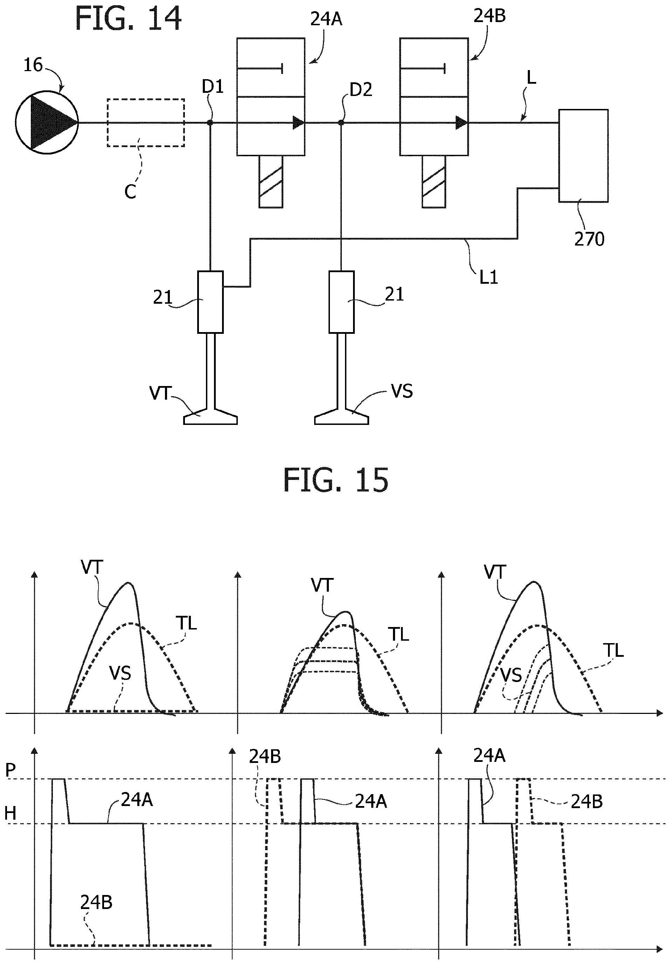

- figure 5 shows diagrams which illustrate different modes of operation of the intake valves which can be obtained through the actuation system of figure 14,

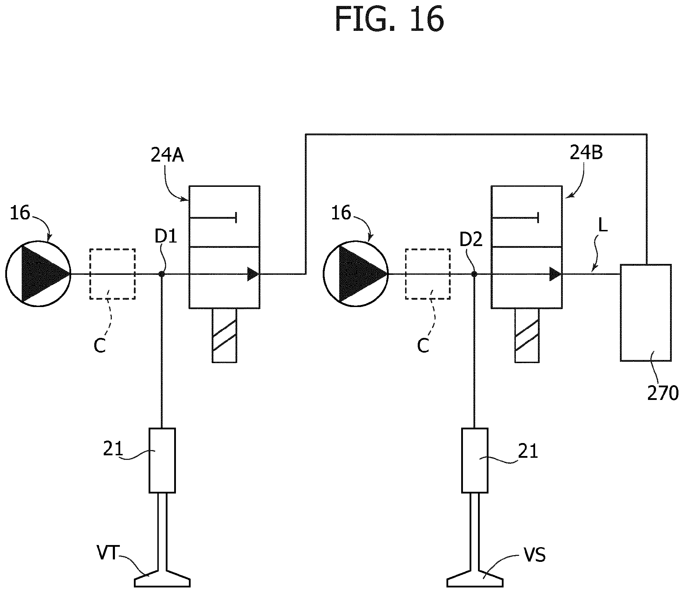

- figure 16 shows the diagram of a further actuation system for the intake valves which can be used in a third embodiment of the present invention,

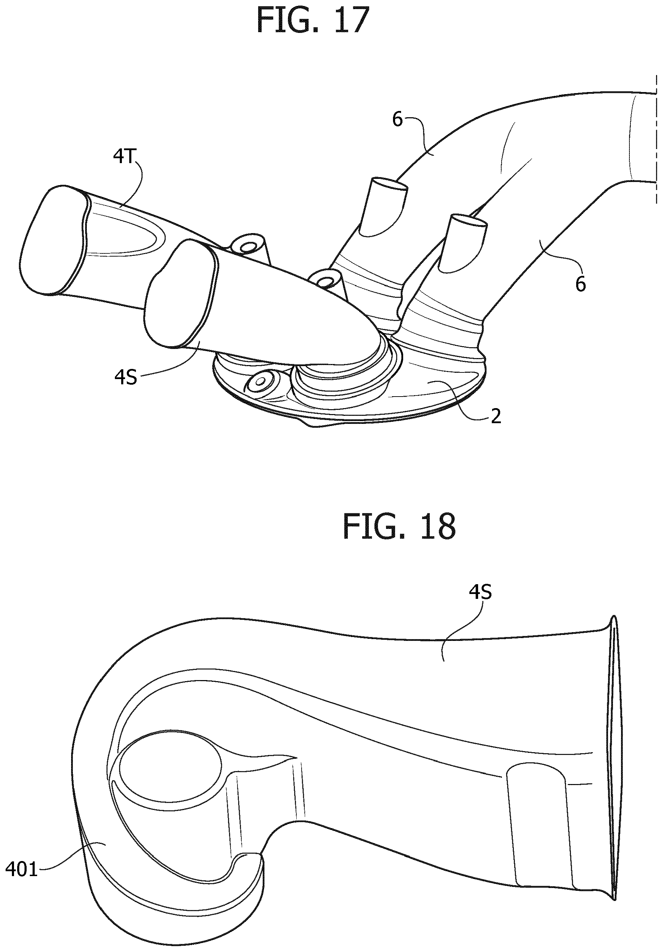

- figure 17 is a perspective view of the combustion chamber of an engine cylinder with the two intake conduits and the two exhaust conduits associated thereto, in a representation in which the hollows are shown as solid parts,
- figure 18 is a perspective view of an exemplary embodiment of the scroll-shaped intake conduit, which generates the swirl motion,

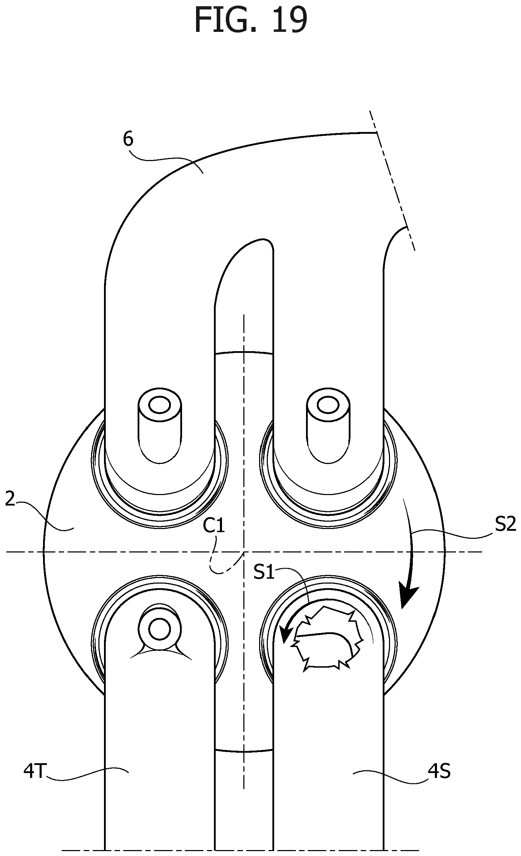

- figure 19 is a diagrammatic plan view of the combustion chamber and the two intake conduits, which shows the opposite swirl motions generated by the two intake conduits of the engine according to the invention.

### The multi-air technology - known solutions

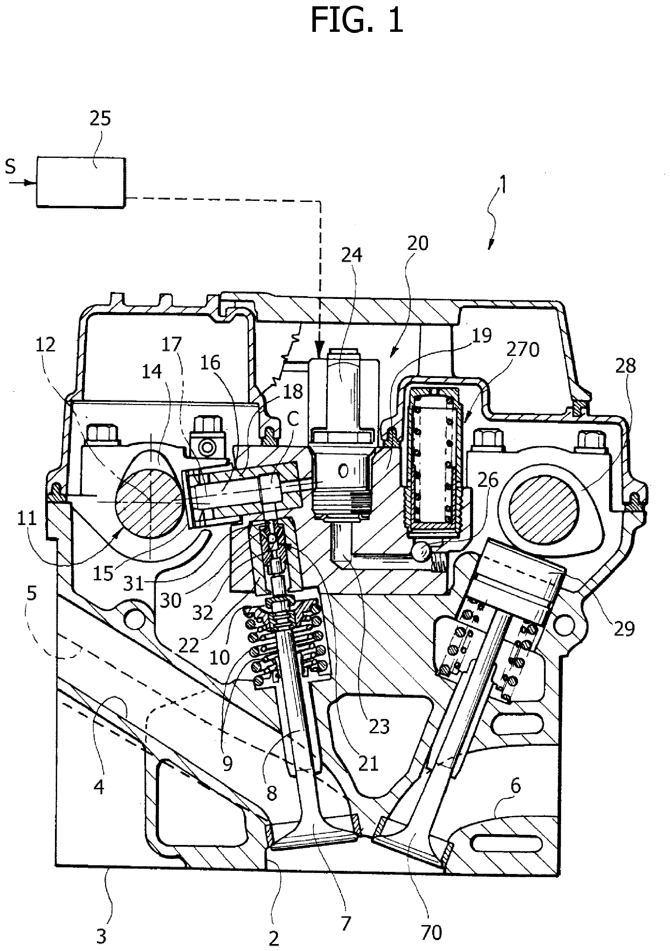

Figure 1 of the annexed drawings show a cross-sectional view of an engine provided with a "multi-air" system, as described in European patent EP 0 803 642 B1.

With reference to this figure 1, the engine shown therein is a multicylinder engine, such as a engine with four cylinders in line, comprising a cylinder head 1. The head 1 comprises, for each cylinder, a cavity 2 formed in the base surface 3 of head 1, defining the combustion chamber, in which two intake conduits 4, 5 and two exhaust conduits 6 open. The communication of the two intake conduits 4, 5 with the combustion chamber 2 is controlled by two intake valves 7, of the conventional mushroom-like type, each comprising a stem 8 slideably mounted within the body of head 1.

Each valve 7 is biased towards the closed position by springs 9 interposed between an inner surface of head 1 and an end washer 10 of the valve. The communication of the two exhaust conduits 6 with the combustion chamber is controlled by two valves 70, also conventional type, to which there are associated springs 9 biasing towards the closed position.

The opening of each intake valve 7 is controlled, in the way which will be described in the following, by a camshaft 11 rotatebly mounted around an axis 12 within supports of the head 1, and comprising a plurality of cams 14 for actuating the intake valves 7.

Each cam 14 which controls a intake valve 7 cooperates with a disk 15 of a tappet 16 slideably mounted along an axis 17 which, in the case of the example illustrated in the above-mentioned prior document, is directed substantially at 90° with respect to the axis of valve 7. Disk 15 is biased against cam 14 by a spring associated thereto. The tappet 16 constitutes a pumping piston slideably mounted within a bush 18 carried by a body 19 of a pre-assembled unit 20, incorporating all the electric and hydraulic devices associated to the actuation of the intake valves, according to what is described in detail in the following.

The pumping piston 16 is able to apply a force to the stem 8 of valve 7, so as to cause opening of the latter against the action of the springs 9, by means of fluid under pressure (preferably oil coming from the lubrication circuit of the engine) which is present in a pressure chamber C to which the pumping piston 16 is facing, as well as by means of a piston 21 slideably mounted in a cylindrical body constituted by a bush 22 which is also carried by the body 19 of the sub-unit 20.

Also in the known solution shown in figure 1, the chamber of fluid under pressure C associated to each intake valve 7 can be put in communication with a discharge channel 23 through a solenoid valve 24. The solenoid valve 24, which can be of any known type, adapted for the function illustrated herein, is controlled by electronic control means, diagrammatically designated by 25, as a function of signals S representative of parameters of operation of the engine, such as the accelerator position and the engine number of revolutions.

When the solenoid valve 24 is opened, chamber C is in communication with channel 23, so that the fluid under pressure present in chamber C flows in this channel and an uncoupling is obtained of cam 14 and the associated tappet 16 with respect to the intake valve 7, which therefore returns rapidly to its closed position under the action of the return springs 9. By controlling the communication between chamber C and the discharge channel 23 it is therefore possible to vary at will the open time and lift of each intake valve 7.

The discharge channels 23 of the various solenoid valves 24 all communicate with a common longitudinal channel 26 which also communicates with pressure accumulators 27, only one of which is visible in figure 1.

All the tappets 16 with the associated bushes 18, pistons 21 with associated bushes 22, solenoid valves 24 and corresponding channels 23,26 are carried and formed in the above-mentioned body 19 of the pre-assembled unit 20, to advantage of quickness and easiness of assembling of the engine.

The exhaust valves 70 associated to each cylinder are controlled, in the embodiment shown in figure 1, in a conventional way, by a respective camshaft 28, through respective tappets 29, even if in principle it is not excluded, in the case of the above-mentioned prior document, an application of the hydraulic actuation system also to the control of the exhaust valves.

Also with reference to figure 1, the chamber with variable volume defined inside bush 22 and facing towards piston 21 (which in figure 1 is shown in its condition of minimum volume, since piston 21 is in its top end position) communicates with the chamber of fluid under pressure C through an aperture 30 formed in an end wall of bush 22. This aperture 30 is engaged by an end nose 31 of the piston 21 so as to provide a hydraulic breaking of the movement of valve 7 in the closing phase, when the valve is approximate to the closed position, since the oil present in the chamber with variable volume is caused to flow into the chamber of fluid under pressure C through the play between the end nose 31 and that the wall of aperture 30 which is engaged the by the nose. In addition to the communication constituted by aperture 30, the chamber of fluid under pressure C and the chamber with variable volume of piston 21 communicate with each other through inner passages formed in the body of piston 21 and controlled by a one-way valve 32 which enables a flow of fluid only from the pressure chamber C towards the chamber with variable volume of piston 21.

During normal operation of the known engine shown in figure 1, when the solenoid valve 24 is closed and excludes a communication of the chamber of fluid under pressure C with the discharge channel 23, the oil present in this chamber transmits the movement of the pumping piston 18, imparted by cam 14, to piston 21 which controls the opening of valve 7. In the starting stage of the opening movement of the valve, the fluid coming from chamber C reaches the chamber with variable volume of piston 21 flowing through the one-way valve 32 and further passages which communicate the inner cavity of piston 21, which has a tubular shape, to the chamber with variable volume. After a first displacement of piston 21, nose 31 comes out from aperture 30, so that the fluid coming from chamber C may flow directly into the chamber with variable volume through the aperture 30, which is now free.

In the reverse movements of closing of the valve, as indicated, during the final stage the nose 31 enters into aperture 30 causing an hydraulic breaking of the valve, so as to avoid collisions of the body of the valve against its seat, for example following an opening of the solenoid valve 24 which causes immediate return of valve 7 to the closed position.

In the described system, when the solenoid valve 24 is activated (i.e. when it is closed), the engine valve follows the movement of the cam (full lift). An early closing of the valve can be used by deactivating (i.e. by opening) the solenoid valve 24, so as to empty the hydraulic chamber and obtain closing of the engine valve under the action of the respective return springs. Similarly, a delayed opening of a valve can be used by a delayed activation of the solenoid valve (i.e. by delayed closing thereof) while the combination of a delayed opening and an early closing of the valve can be used with activation and a deactivation of the solenoid valve during the pushing action of the associated cam. According to an alternative strategy, corresponding to the teaching of patent application EP 1 726 790 A1 of the same Applicant, each intake valve can be controlled in a "multi-lift" mode, i.e. with two or more repeated opening and closing "sub-cycles".

In each sub-cycle, the intake valve is opened and then closed completely. The electronic control unit is therefore able to obtain a variation of the opening time and/or closing time and/or lift of the intake valve, as a function of one or more operational parameters of the engine. In this manner, a maximum efficiency of the engine can be obtained, with the minimum fuel consumption, at any operation condition.

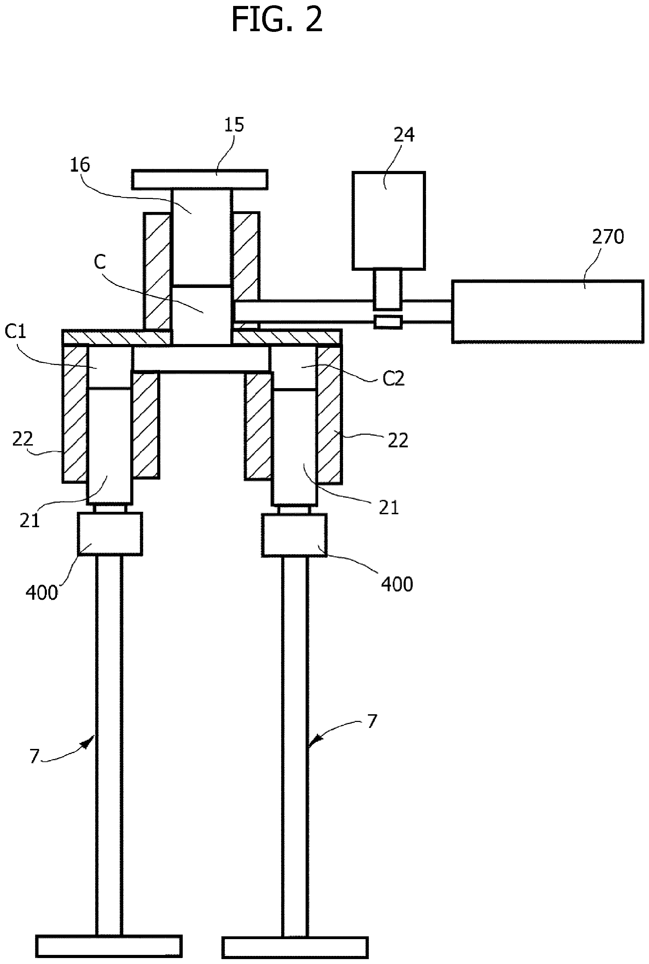

Figure 2 of the annexed drawings corresponds to figure 6 of EP 1 674 673 and shows the diagram of the actuation system for the two intake valves associated to each cylinder, in a conventional multi-air system. This figure shows two intake valves 7 associated to a same cylinder of an internal combustion engine, which are controlled by a single pumping piston 16 which on its turn is driven by a single cam of the camshaft of the engine (not shown) which acts against its disk 15. This figure does not show the return springs 9 (see figure 1) which are associated to valves 7 and tend to bring them to their respective closed positions.

As shown, in the conventional system of figure 2, a single pumping piston 16 controls the two valves 7 through a single pressure chamber C, whose communication with the discharge is controlled by a single solenoid valve 24 and which is hydraulically in communication with both the variable volume chambers C1, C2 towards which the pistons 21 for controlling the two valves are facing.

This solution has clear advantages in terms of a lower bulk within the cylinder head, and reduced cost and lower complexity of the system, whit respect to a solution which has one cam and one solenoid valve for each intake valve of each cylinder.

The system of figure 2 is able to operate efficiently and reliably particularly in the case in which the volumes of the hydraulic chambers are relatively small. This possibility is offered by adopting hydraulic tappets 400 outside of the bushes 22, according to what has been illustrated in detail for example in document EP 1 674 673 B1 of the applicant. In this manner, the bushes 22 can have a minor diameter which can be selected as small as desired.

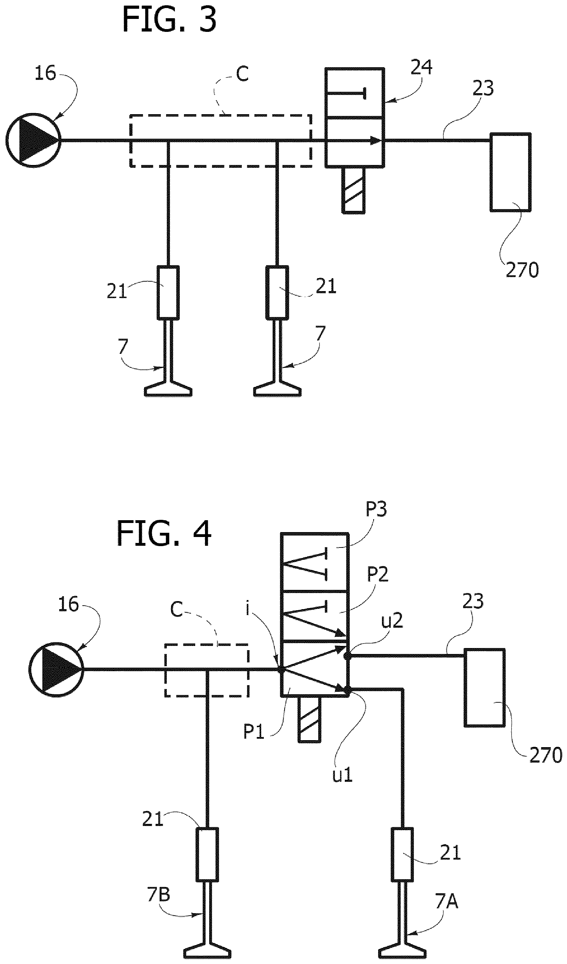

Figure 3 of the annexed drawings is a diagrammatic illustration of the system shown in figure 2, in which it becomes clear that both of the intake valves 7 associated to each cylinder of the engine have their actuators 21 permanent in communication with the pressure chamber C, which on its turn can be either insulated or connected with respect to the discharge channel 23 through the single solenoid valve 24.

The solution shown in figures 2, 3 provides clear advantages in terms of simplicity and reduced cost of manufacture, and also in terms of reduction of dimensions, with respect to the solution shown for example in document EP 0 803 642 B1, which has two solenoid valves for controlling the two intake valves of each cylinder separately.

On the other end, the solution with a single solenoid valve for each cylinder eliminates the possibility of differentiating the control of the intake valves of each cylinder. This differentiation is instead desired: in the case of the diesel engines in which each cylinder is provided with two intake valves associated to respective intake conduits having different shapes, for the purpose of generating different movements of the airflow introduced into the cylinder (see for example figure 5 of EP 1 508 676 B1). Typically in these engines the two intake conduits of each cylinder are configured for optimising a "tumbled-like flow and a swirl-like flow inside the cylinder", respectively, these movements being very important for a best distribution of the air charge inside the cylinder, from which the possibility of reducing polluting emissions at the exhaust is substantially dependent.

In spark-ignition engines, this differentiation is desired at low loads of the engine, both for optimising the air flux coefficients through the intake valves and for reducing the pumping cycle accordingly and also for optimising the field of motion of the air inside the cylinder during the intake stage.

As indicated, in the multi-year systems with a single solenoid valve for each cylinder, there is no possibility to control the two intake valves of each cylinder independently. It would be desirable instead two increase each time the fraction of the air charge which is introduced with a tumble motion and the refraction of the air charge which is introduced with a swear motion, depending upon the operative conditions of the engine (number of revolutions, load, cold start, etc.) and depending upon the configuration of the engine (fuel direct injection, high compression ratio, intake conduits adapted to favour feeling of the cylinder rather than turbulence, etc.).

Similarly, in a spark-ignition engine, particularly when the engine is operating at partial loads or at idle, the problem is posed of introducing a small air charge with sufficient kinetic energy for favouring an optimal field of motion for the combustion inside the cylinder. In these operating conditions, it would be therefore preferable that the entire air masses is introduced by only one of the two intake valves for reducing the dissipation losses in the passage through the valve itself. Advantageously this air masses is preferably to be introduced with a lift variation of the valve which is greater than the conventional one and also when the piston is already moving so as to further increased turbulence. In other words, for a given mass of air which must be introduced into the combustion chamber and for a given pressure within the intake manifold and for a given vacuum generated by the movement of the piston within the combustion chamber, there are lower dissipation losses (and then hire kinetic energy) for the mass of air introduced by a single intake valve which opens with a lift of 2h with respect to the case in which the same mass of air is introduced by two intake valves each having a lift of h. If the 2h lift becomes higher than the threshold determined by the configuration of the cylinder head, it is possible to provide a discharge port in the hydraulic circuit which controls said valve, said discharged port being communicated to a low-pressure environment, not shown in the drawing, which, ones the valve lift has reached a predetermined value, maintains this lift constant up to when this discharge port is closed.

In document EP 2 801 706 A1 of the same applicant there is shown an internal combustion engine of the type indicated at the beginning of the present invention and further characterized in that the solenoid valve associated to each cylinder is a three-way three-position the solenoid valve comprising an inlet which is permanently communicating with said chamber of fluid under pressure and with the actuator of the first intake valve, and the two outlets respectably communicating with the actuator of the second intake valve and would said discharge channel. In this solution, the solenoid valve has the following three operative positions:
- a first position, in which the inlet communicates with both of the outlets, so that the actuators of both the intake valves are put to discharge, and the intake valves are both held closed by their returns springs,
- a second position, in which the inlet communicates only with the outlet connected to the actuator of the second intake valve and does not communicate instead with the outlet connected to the discharge channel, so that the pressure chamber is insulated with respect to the discharge channel, the actuators of both the intake valves communicate with the pressure chamber and the intake valves are therefore both active, and
- a third position, in which the inlet does not communicate with any of the two outlets, so that said pressure chamber is insulated with respect to the discharge channel and said first intake valve is active, whereas the second intake valve is insulated with respect to the pressure chamber.

The control valve associated to each cylinder of the engine can have a solenoid-operated electric actuator or any other type of electric or electromagnetic actuator.

With reference to the diagrammatic illustrations of figures 4-6, the two intake valves associated to each cylinder of the engine (which are designated by references 7A, 7B in figures 4-6) are not both permanently connected to the chamber of fluid under pressure C. In the case of this solution, only one of the two intake valves (the valve which in the drawings is designated by reference 7B) has its hydraulic actuator 21 permanently communicating to the chamber of fluid under pressure C. Furthermore, the two-position two-way solenoid valve 24 is replaced by a three-way three-position solenoid valve, having an inlet "i" which permanently communicates to the chamber of fluid under pressure C, and to the hydraulic actuator of the intake valves 7B, and two outlets u1, u2. Outlet u1 is permanently communicating with the hydraulic actuator 21 of the intake valve 7A, whereas the outlet u2 is permanently connected to the discharge channel 23 and the hydraulic accumulator 270.

Figure 4 shows the solenoid valve in its first operative position P1, corresponding to a de-energized condition of its solenoid. In this position, inlet i is in communication with both outlets u1, u2, so that the hydraulic actuators of both intake valves 7A, 7B, as well the chamber of fluid under pressure C are in communication with the discharge channel 23 and the accumulator 270, so that both the valves are uncoupled with respect to the tappet and held closed by the respective return springs.

Figure 5 shows a second position of the solenoid valve, corresponding to a first energization level of the solenoid, in which inlet i is in communication with outlet u1, whereas the communication between inlet u and outlet u2 is interrupted. Therefore, in this condition the actuators of both the intake valves 7A,7B are in communication with the pressure chamber C and the latter is insulated with respect to the discharge channel 23, so that both the intake valves are active and sensitive to the movement of the respective tappet.

Figure 6 shows the third operative position of the solenoid valve, corresponding to a second energization level, higher than the first energization level, in which the inlet i is insulated with respect to both outlets u1,u2 so that the chamber of fluid under pressure C is insulated with respect to the discharge channel 23 and the intake valve 7B is therefore active and sensitive to the movement of the respective tappet, whereas in this condition the actuator of the intake valve 7A is insulated both with respect to the chamber of fluid under pressure (so that it is uncoupled with respect to the movements of the respective tappet) and with respect to the discharge channel 23.

Therefore, as shown, it is possible to render the two intake valves 7A, 7B associated to each cylinder of the engine both sensitive to the movement of the respective tappet, but it is also possible to uncouple both of them from the respective tappet by causing them to be held closed by the respective return springs, and it is also possible to uncouple only the intake valve 7A from the respective tappet, while leaving only intake valve 7B active.

When an opening command for the two intake valves 7A, 7B ceases, the solenoid valve is brought again to position P1 to enable the pumping piston 16 to draw a flow of oil from volume 270 towards volume C.

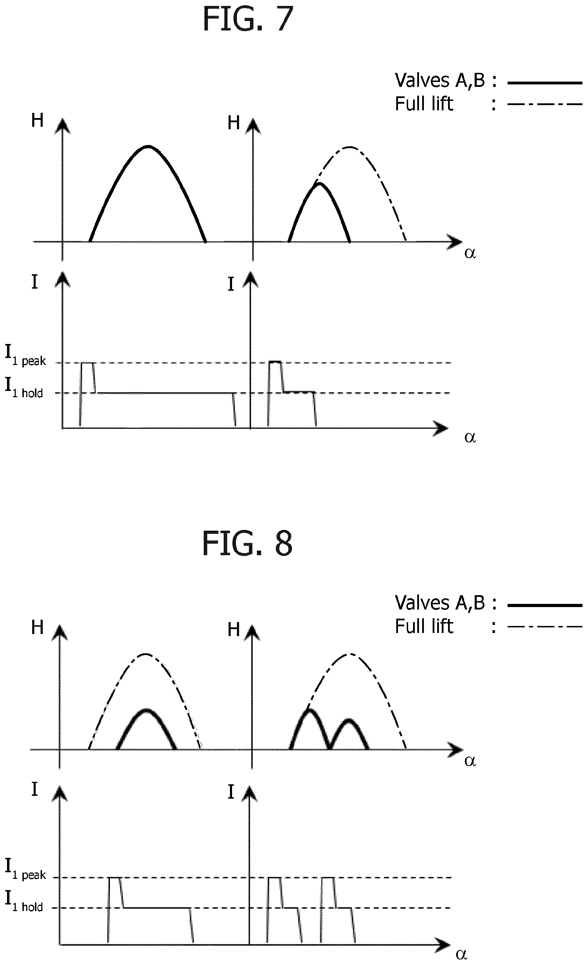

Figures 7, 8 of the annexed drawings show lift diagrams of the intake valves and the corresponding diagrams of the current supplying the solenoid of the solenoid valve, when the solenoid valve is used by shifting it only between position P1 and position P2, that is between the conditions respectably shown in figure 4 and figure 5. In the case of an operation of this type, the two intake valves associated to each cylinder of the engine are driven in ways identical to each other, that is similarly to what takes place in a conventional system with solenoid valves having only two positions, as illustrated in figure 3.

The diagram at top left of figure 7 shows a "full lift" mode in which both the intake valves of each cylinder of the engine are controlled in a conventional way by causing each of them to take the full-lift which is driven by the respective cam over the engine camshaft. The diagram shows lift H of both valves as a function of the engine crank angle α. The portion at bottom left of figure 7 shows a diagram of the current supplying the solenoid of the solenoid valve in the above mentioned full-lift mode. In order to enable opening of both the intake valves associated to each engine cylinder during the active stage of the respective tappet, in which the tappet tends to open the valves, the solenoid valve is brought from position P1 to position P2 (condition shown in figure 5), in which both of the valves 7A, 7B are coupled with the tappet. This is obtained by supplying the solenoid with a first current level I. It is to be observed that the portion at bottom left of figure 7 shows, by way of example, a current diagram in which, according to a technique known per se, the solenoid of the solenoid valve is supplied initially with a peak current I1 peak and right thereafter with a hold current I1 hold throughout the entire field of rotation of the crankshaft in which the tappet tends to open the intake valves. However, it is possible to provide for a constant current level for each of positions P2 and P3 of the solenoid valve.

The portion at top right of figure 7 shows an "early closing" mode of conventional type, in which both the intake valves associated to each cylinder of the engine are closed simultaneously in advance with respect to the end of the active phase of the respective tappet, so that the lift diagram of both valves is that shown by undotted line that in the portion at top right of figure 7, rather than that illustrated by dotted line (which is coincident with the previously discussed full-lift case). The portion at bottom right of figure 7 shows the corresponding diagram of the current for supplying the solenoid. As shown, in this case the solenoid valve is brought to the position P2 as in the "full-lift" case, but then the current supplying the solenoid is brought to zero in advance with respect to the end of the active phase of the tappet, so that the solenoid valve returns to position P1 and both the intake valves associated to each cylinder return to their closed condition in advance with respect to the end of the active phase of the respective tappet.

Figure 8 of the annexed drawings shows two other modes of operation of known type, in which both the intake valves associated to each cylinder are controlled so that the variation of movements of each valve is identical to the other by shifting the solenoid valve which controls the intake valves only between positions P1 and P2: therefore, by undotted line there is shown the movement of both valves. The portion at top left of figure 8 shows the lift of both the intake valves (undotted diagram) in a "late opening" mode in which the solenoid of the solenoid valve is supplied with a current at level I1 starting from an instant of time subsequent to the beginning of the active phase of the tappet. Therefore, each of the two intake valves does not have a full-lift (shown by dotted line in the section at top left of figure 8) but rather a reduced lift (shown by undotted line). Since in this case the intake valves of each cylinder are coupled to the respective cam after a given time from the beginning of the active phase of the tappet, the two valves open with a reduced lift, since they will feel only the remaining portion of the profile of the respective actuating cam, which brings the consequence of that the valves return to their closed positions in advance with respect to the full-lift case.

More in detail, the cam is characterised by a profile 14 such that it moves piston 17 of the pumping cylinder 16 rigidly connected their two according to h=h(θ) law where h is the axial displacement of piston 17 and θ is the angular rotation of the shaft on which cam 11 is connected. Depending on the angular speed of the cam, therefore, the piston is moved to according to a h=(θ, t) law.

Independently from the angular speed of the cam, at each revolution of the camshaft the piston 17 will always move at the same volume of oil V st max=H max*area st, where H max is the maximum travel of the piston imparted by the profile of the cam (all losses are herein neglected which depend from losses in feeling the piston chamber, leakages, or non-perfect coupling between cam and piston, the oil being supposed the to be incompressible). The maximum displacements of the intake valves depends from the volume of oil which is pumped inside element 21: the case of full lift of both the intake valves corresponds to the case in which the entire volume V st max is used to move the above mentioned valves, which therefore reach their maximum lift S max. If solenoid valve 24 is shifted when the piston is moving, so as to put a certain volume of oil to discharge, the travel S of the intake valves will be lower than S max and the difference S max-S will be proportional to the volume which is passed through solenoid valve 24. Therefore it is understood why, in the diagram at the left of figure 8, the profile of the intake valves does not reach the maximum lift S max.

Also in the case of figure 8, the current diagrams relate to an example in which the current level I1 is provided by at first reaching a peak level I1 peak and then bringing the current to a lower level I1 hold. However, it is clearly apparent that also in this case simplified current profiles may be adopted, without a starting peak level.

The portion at top right of figure 8 shows the lift diagram of both the intake valves associated to each cylinder of the engine in a "multi-lift" mode in which both intake valves do not have the full lift profile shown with dotted line, but instead they are opened and closed completely more than one time during the active phase of the respective tappet (undotted line diagram). This mode of operation is obtained with the current profile shown in the section at bottom right of figure 8, where it is shown that the solenoid of the solenoid valve is supplied at current level I1 (in the case of the illustrated example through a first peak value I1 peak and then with a lower hold value I1 hold) and then is again completely de-energized, to be again energized at level I1 and then again de-energized, both the above indicated cycles being carried out within the field of rotation of the engine crankshaft corresponding to the active phase of the tappet which controls the intake valves. In this manner, the solenoid valve is brought initially to position P2, so that both the valves start to open, but then is brought again to position P1, so as to close completely both valves. A new energization of the solenoid at level I1 causes a new displacement of the solenoid valve to position P2 and then a new opening of both valves, which then are closed again definitely as soon as the solenoid is de-energised for the second time. In this manner, within the active phase of tappet which controls the intake valves, both intake valves are opened and closed completely two or more times.

The modes of operation shown in figures 7, 8 which have been described in the foregoing are conventional modes of operation in Multi-air (registered trademark) systems, since in this case three positions' solenoid valves is used as a solenoid valve with two only positions, similarly to conventional Multi-air systems.

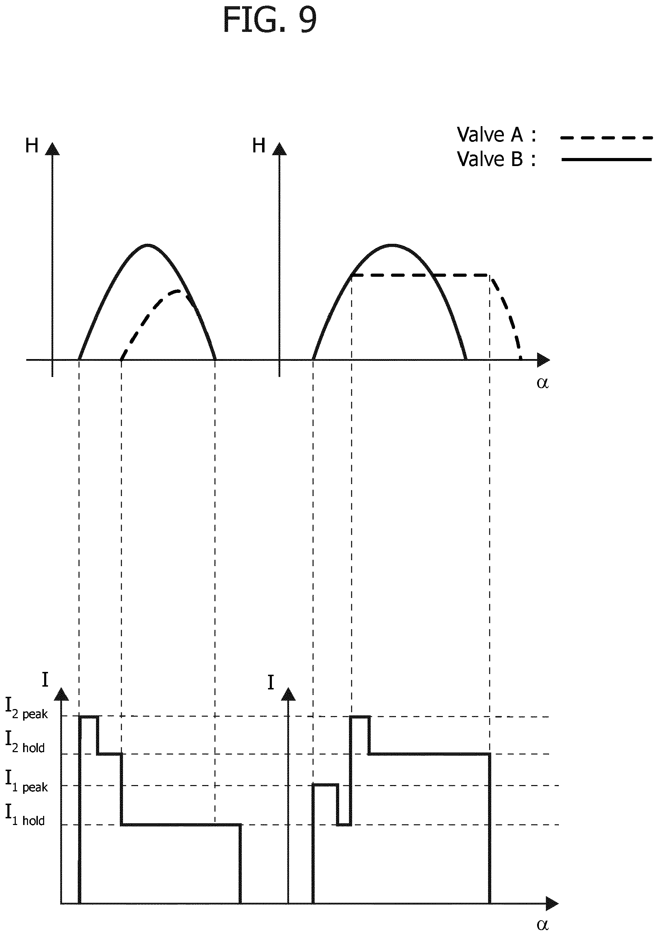

The diagrams of figure 9 of the annexed drawings show additional modes of operation of the engine which have been already illustrated in EP 2 801 706 A1. In this additional control modes, the two intake valves associated to each cylinder of the engine are controlled in a differentiated manner. In the above mentioned diagrams and in the descriptions which follows, the lift diagrams of the intake valves 7A, 7B, previously discussed with reference to figures 4, 6 are designated simply as "valve A" and "valve B" respectively and are therefore differentiated.

In the top portion of figure 9, the undotted line diagrams show lift profiles of the valve B, whereas the dotted line diagrams show lift profiles of valve A respectively in two different modes of operation.

The left section of figure 9 shows a mode of operation in which valve B is controlled in a full lift mode, i.e. so as to cause it to have a conventional lift cycle during the active phase of the respective tappet. Differently from valve B, valve A is controlled in a "delayed opening" mode in which valve A is opened with a delay with respect to valve B. This mode of operation is obtained by supplying the solenoid of the solenoid valve according to the current profile shown in the left section of the low portion of figure 9. As shown, the solenoid is supplied initially at a current level I2 so as to bring the solenoid valve from position P1 to position P3 (condition shown in figure 6). The example shown relates to the case in which the current level I2 is obtained by adopting at first briefly a peak level I2 peak and then lowering the current to a hold level I2 hold. As indicated many times above, it will be also possible to provide simplified current diagrams, with a constant current level for which of positions P2 and P3. This possibility applies also to all the other modes of operation described herein.

Also with reference to the top left portion of figure 9, with regard to the mode of operation of the solenoid valve 24, it is understood that the shift from position P1 to position P3 takes place by passing for a very small time through position P2: however, from the point of view of the intake valves, this transition is not appreciated and therefore they see the solenoid valve 24 to shift directly from position P1 to position P3.

Also with reference to the left section of the lower part of figure 9, during the active phase of the tappet, the supplied current of the solenoid is lowered at a level P1 hold which is held throughout the remaining part of the active phase of a tappet. When the level of the supplied current passes from I2 to 11, the solenoid valve moves from position P3 shown in figure 6 to position P2 shown in figure 5. Therefore, in the case of the mode of operation shown in the left part of figure 9, the solenoid valve is initially brought to position P3 (figure 6) so that only valve B is coupled to the respective tappet and only valve B is opened according to the conventional lift profile. In the first part of the active phase of the tappet, therefore, valve A remains closed. In that time instant in which the current supplying the solenoid of the solenoid valve is brought from level I2 to level 11, the solenoid valve shifts from position P3 shown in figure 6 to position P2 shown in figure 5 so as to couple both valves A, B to the respective tappet. Therefore, starting from this instant of time, also valve A is opened. As a result of this, in this case the opening of valve A takes place with a delay with respect to the opening of valve B. The valve A feels the respective tappet throughout the remaining part of the active phase of the tappet, so that it has a lift diagram corresponding to the dotted line in the left section of the top portion of figure 9 and is closed together with valve B.

The right section of the top portion of figure 9 shows a further control mode for the intake valves. Also in this case, valve B has a conventional lift cycle, since it is coupled to the respective tappet throughout the entire duration of the active phase of the tappet. Instead valve A has a lift profile shown by dotted line in the right section of the top portion of figure 9. This mode of operation is obtained by supplying the solenoid of the control valve according to a current profile which is shown in the right section of the bottom portion of figure 9. As shown, at the start of the active phase of the tappet, the solenoid of the control valve is supplied with a current level I1 (which as usual in the case of the illustrated example has a starting peak level and a subsequent maintenance level). During the active phase of the tappet, the supply current is then brought to the higher level I2 (again, in this specific example, a first peak level and then a maintenance level are provided). Also with reference to the right section of figure 9, the supply current of the solenoid is then brought to zero at a time subsequent to the end of the active phase of the tappet. As shown, in the case of this control mode, the valve B is controlled in a "*full lift*" mode, whereas valve A is controlled in a "*delayed closing*" mode. At the start of the active phase of the tappet, the solenoid valve is supplied at level I1 and therefore is in the position P2 shown in figure 2. In this condition, both the intake valves A and B are opened, as shown in diagrams in the right section of figure 9. Subsequently, during the active phase of the tappet, the supply current of the solenoid is brought to level I2, so that the solenoid valve shifts to position P3, shown in figure 6, in which valve B remains coupled to the tappet, whereas valve A is insulated. In this condition, therefore, valve A remains in the opened position in which it is located at the moment when the solenoid valve is brought to position P3. As shown in the right section of figure 9, the current level I2 is maintained also after the end of the active phase of the tappet, so that, in this control mode, valve A remains locked in said opened position also after the end of the active phase of the tappet. Valve A returns to the closed condition only when the supply current of the solenoid of the control valve is brought again to zero, so that the solenoid valve returns to position P1.

Therefore, in the mode of operation described in the right sections of figure 9, one of the two intake valves is controlled in a conventional way, whereas the other intake valve is partially opened and then maintained in this partially opened position also after the end of the active phase of the respective tappet. The duration of the phase in which the intake valve A is locked in said partially opened position can be determined at will, since it is a function of the selected current profile. If desired, due to the above-mentioned measure, valve A can remain locked in the partially opened position through any range of rotation of the crankshaft for each revolution of the crankshaft, if necessary also through 360° (naturally by selecting a lift level such that valve A does not come in contact with the piston when the latter is at its top position in the cylinder, or by adopting for the piston geometry a geometrical configuration which avoids this contact; furthermore, the movement of valve A when the solenoid valve 24 is at position P3 is affected by leakages of the solenoid valve 24 itself).

### The invention

In the present invention various embodiments of an electro-hydraulic actuation system for the intake valves are advantageously used in an engine in which each cylinder is provided with two intake valves respectively associated to two intake conduits which are configured for generating a *tumble* motion and a *swirl* motion of the airflow introduced into the cylinder.

Figure 10 of the annexed drawings shows a cylinder head 1 including an intake conduit 4 for introducing an airflow A into a cylinder 2. Figure 10 shows a characteristic *tumble* flow, consisting in a joint rotation, in a single directional rotation, of the entire airflow around a theoretical axis A1 which is orthogonal to the axis of cylinder C1.

For the purpose of obtaining a *tumble* motion of the type diagrammatically illustrated in figure 10, conduit 4 is configured in any known way adapted to convey the entire airflow coming out from conduit 4 mainly on one side of the intake valve 7 associated to conduit 4, in particular on the side proximate to the symmetry axis of the cylinder, so as to generate a primary anti-clockwise vortex, as shown in figure 10. Figure 11 shows an example of configuration of the intake conduit 4 adapted to obtain a more accentuated *tumble* effect. As shown in this figure, conduit 4 has an asymmetrical configuration, with a lateral inclined wall 4A (a so-called "masking") which is shaped so as to define a narrow cross-section 4B of a conduit 4 which conveys the airflow mainly towards a localized area 4C arranged on one side of the mushroom-shaped head of the intake valve 7. In this manner, a substantial portion of the airflow coming out from conduit 4 is directed according to arrow A of figure 11, so as to give rise, due to the impact against the wall of cylinder 2, to a *tumble* vortex of the type diagrammatically shown in figure 10. It is understood that, both with reference to figure 10 and with reference to figure 11, a flow of air entering through the portion of the intake valve close to the wall of the cylinder is possible, but this flow is characterized by a minor intensity, so that it does not affect the formation of the primary vortex significantly.

Figure 12 diagrammatically shows an airflow A which enters into cylinder 1 with a *swirl* motion. The intake conduit 4B is shaped accordingly. The *swirl* motion is substantially a motion in the form of a helical spiral, around axis C1 of cylinder 2.

In the engine according to the invention, the intake conduit 4T is configured so as to generate within the cylinder:
- a main tumble motion of the airflow around a first tumble axis A1, substantially orthogonal to the cylinder axis C1,
- a cross-tumble motion of the airflow around a second tumble axis (not shown), substantially orthogonal to said first tumble axis and orthogonal to the cylinder axis C1,
- a swirl motion around the cylinder axis C1.

Furthermore, in the engine according to the invention, the second intake conduit 4S has a scroll-type configuration of any known type, such as to generate a swirl motion of the airflow within the cylinder around the cylinder axis C1, in a direction opposite to that of the swirl motion induced by the first intake conduit (4T).

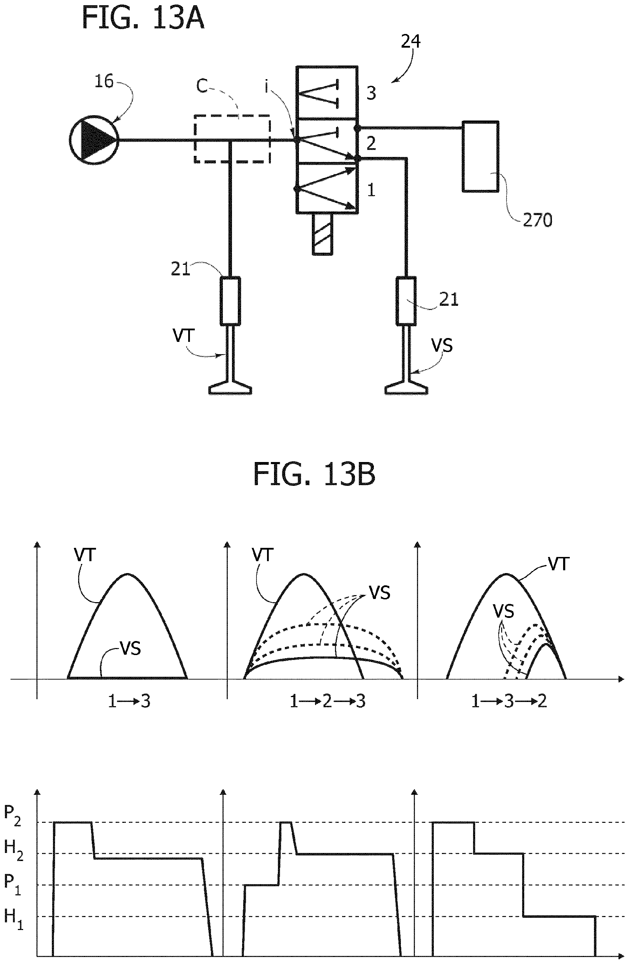

Figures 13A, 14 and 16 show three different embodiments of the invention. In all the embodiments each cylinder is provided with two intake valves. A first intake valve, which is designated by VT in figures 13A, 14 and 16, is associated to an intake conduit configured in any known way which is adapted to generate a *tumble* motion of the airflow introduced into the cylinder.

A second intake valve, which in figures 13A, 14 and 16 is designated by VS, is associated to an intake conduit shaped and arranged so as to generate a *swirl* motion of the airflow introduced into the cylinder.

In all the embodiments of the present invention which are shown herein, the electronic controller 25 of the system for variable actuation of the intake valves is configured and programmed so that only one of the two intake valves of each cylinder is opened, even only partially with respect to the maximum lift which is possible for the valve, in a condition of reduced operation of the engine, below a predetermined load of the engine and/or below a predetermined speed of rotation of the engine, whereas both the intake valves are at least partially opened in the remaining conditions of operation of the engine.

According to an important feature of the present invention, the electronic controller 25 is programmed so that the intake valve which is the only valve to be opened in the above-mentioned condition of reduced operation of the engine is the intake valve VT, associated to the intake conduit which is configured for generating a *tumble* motion. Furthermore, according to the present invention, in certain conditions of operation of the engine, such as at low loads, and depending from the configuration of the engine, for example depending from the presence of an injector for direct injection or the presence of intake conduits which are optimized for increasing cylinder filling, it may be advantageous to delay opening of the valve VT, when this valve is opened, whereas valve VS remains closed, so as to exploit the speed of the piston for further increasing the intensity of the *tumble* motion which is generated in the combustion chamber. For example, it may be advantageous to open valve VT when the piston of the engine has covered about one third of its intake stroke.

Studies and tests conducted by the Applicant have shown that at low loads and low speeds of revolution of the engine it is indeed very advantageous to impart only a *tumble* motion to the airflow which enters into each cylinder of the engine. In this manner it is indeed possible to increase the speed of the combustion and accordingly to improve the stability of the combustion, so as to improve the characteristics of the engine, mainly with reference to the obtained power. At the same time, the absence of a *swirl* motion at low loads and/or low speeds of revolution does not give rise to any drawbacks, since it is above all in conditions of high loads and/or high speeds of revolution of the engine which the *swirl* motion becomes necessary for mitigating the drawback due to impingement of the liquid particles, coming from the fuel jet at the output of the injector, which are not yet evaporated, against the wall of the cylinder, and also because the *swirl* component, particularly for engines with a high compression ratio, is subject to a lower dissipation while the compression stage of the piston is in progress: in this manner it is possible to have a greater conservation of the momentum of the air/fuel charge which is necessary for a stable combustion.

The adoption of an electro-hydraulic actuation system for the intake valves of the engine according to the *Multiair* technology results to be particularly advantageous in the case of the present invention since it enables the second intake valve VS associated to the intake conduit which is configured for generating a *swirl* motion of the airflow introduced into the cylinder, to be opened only partially, as will be shown in detail in the following.

### First embodiment of the invention

Figures 13A, 13B relate to a first embodiment of the present invention in which the system for variable actuation of the intake valves is of the known type shown in document EP 2 801 706 A1 of the same Applicant, corresponding also to figures 4-6 which are annexed hereto.

According to what has been already indicated in the foregoing, the three-way three-position solenoid valve 24 can be controlled according to three different current profiles (shown in the lower part of figure 13B) for generating the modes of operation which are shown in the diagrams of the upper part of figure 13B.

In a first mode of operation, corresponding to the above-mentioned condition of reduced operation of the engine (below a determined value of the engine load and/or below a determined value of the speed of rotation of the engine) at the start of the lift cycle of the respective actuating cam, the solenoid valve 24 is brought from state 1 to state 3 so that the intake valve VT has a lift cycle having a profile (or law of motion) higher with respect to that which the same valve VT would have in the case of a standard opening in synchronism with valve VS (figure 7), whereas the intake valve VS remains constantly closed.

In this manner, in this condition of reduced operation of the engine, the air enters into the cylinder only through the first intake conduit, giving rise to a tumble motion. The diagram shown at the centre in figure 13B refers to a mode of operation in which both the intake valves VT and VS are actuated at the same opening start time, but with different closing times. At the time in which the lift cycle of the respective cam begins, the three position solenoid valve 24 is shifted from position 1 to position 2 so that initially both the intake valves start their lift cycle. However, in an intermediate phase of the active lift cycle of the cam, the solenoid valve is shifted from position 2 to position 3 (see also the corresponding current signal in the lower part of figure 13B) so that the intake valve VT moves according to a law motion which depends from the quantity of oil which the pumping piston 16 can still displace, this law of motion causing any how a higher lift with respect to the standard lift of figure 7, whereas the intake valve VS reaches a partial lift level after which it is closed with a delay with respect to the end of the active lift cycle of the cam.

The right part of figure 13B shows a late opening mode of operation in which at the start of the active cycle of the cam the solenoid valve is shifted from position 1 to position 3, so that only the intake valve VT performs its lift cycle, whereas in a subsequent stage of the lift cycle of the cam, the solenoid valve 24 is shifted from position 3 to position 2 to generate a partial undelayed lift of the intake valve VS: in this mode, the lift profile of valve VT is identical to that of the case shown on the left in figure 13B, up to the moment of shifting from position 3 to position 2.

The above mentioned modes of operation can be actuated in different conditions of operation of the engine, so that in the above mentioned condition of the reduced operation only the intake valve VT is opened, generating thereby only a tumble motion of the airflow introduced into the cylinder. In particle, in the case of a particularly reduced engine loads and relatively large combustion chambers, it could be preferable to open even only partially the above mentioned valve VT. In the remaining conditions of operation of the engine, one of the two remaining modes of operation which have been shown above can be actuated, in order to obtain, in addition to the tumble motion, also a swirl motion, but to an extent which is proportional to the partial lift level of the intake valve VS. In this manner, it is possible to obtain a desired combination of the tumble component and the swirl component with a significant advantage in terms of increase of the speed of combustion within the cylinder and in terms of homogeneity of the air/fuel mixture, thus avoiding at the same time all the drawbacks of the solutions according to the prior art.

### Second embodiment of the invention

Figure 14 shows a diagram of the system for variable actuation of the intake valves, which can be used in a second embodiment of the present invention.

Differently from the system shown in figure 13A, the system of figure 14 was never proposed previously by the applicant and therefore constitutes, also taken per se, a new development in the multi-air technology developed by the applicant.

In this embodiment the system for variable actuation of the intake valves VT, VS comprises, similarly to the known systems which have been described in the foregoing, a single pumping cylinder 16 actuated by a respective cam of the camshaft of the engine, for controlling the operation of the two intake valves of each cylinder. In this case, the communication of the hydraulic actuators 21 and the two intake valves VT, VS with the discharge channel 270 is controlled by means of two electrically actuated control valves 24A, 24B, both of an on/off two position type, arranged in series with each other along a hydraulic line L which communicates the pressure chamber C to the discharged environment 270.

The control valves 24A, 24B can be two solenoid valves of any known type, for example two normally opened solenoid valves which are shifted to a closed position by energizing a respective solenoid.

Also with reference to figure 14, the hydraulic line L includes, starting from pressure chamber C towards the discharge channel 270, a first branch-off point D1, connected to the hydraulic actuator 21 of the intake valve VT, associated to the intake conduit which is configured for generating a tumble motion, and a second branch-off point D2 connected to the hydraulic actuator 21 of the intake valve VS associated to the intake conduit configured for generating a swirl motion.

A first solenoid valve 24A is arranged between the second branch-off point D2 and the discharge channel 270, so that when the solenoid valve 24A is closed, the communication is interrupted of the hydraulic actuator 21 of valve VT both with the discharged environment 270 and with the hydraulic actuator 21 of valve VS.

The second solenoid valve 24B is arranged along the line L between the branch-off point D2 and the discharge 270. Therefore, when the solenoid valve 24A is closed, the actuator 21 of the intake valve VT is always in communication with the pressure chamber C, whereas the communication between actuator 21 of intake valve VT and the discharge channel 270 is anyway interrupted, independently from the condition of operation of solenoid valve 24B; in these conditions the actuator 21 of intake valve VS is no longer in communication with the pressure chamber C, independently from the condition of operation of solenoid valve 24B. When instead the solenoid valve 24A is opened and the solenoid valve 24B is closed, both the intake valves VT and VS are in communication with the pressure chamber C and are isolated from the discharge channel 270.

Figure 15 shows three different diagrams corresponding to three different modes of operation which can be activated whit the use of the actuation system of figure 14, depending upon the conditions of operation of the engine. The lower part of figure 15 shows the corresponding current profiles for supplying the two solenoid valves 24A, 24B.

In figure 15, in addition to the lift diagrams of the intake valves VT and VS there is also shown the standard lift diagram TL, corresponding to the law of motion which the two valves VT and VS would have if the solenoid valve 24B were always closed and the solenoid valve 24A were always opened, in which case both the intake valves VT and VS would follow the profile of the cam, except for any negligible hydraulic losses.

The same remark applies to the configuration of figure 13A, where the lift profile TL corresponds to that which would be obtained if solenoid valve 24 where always in the operative condition 3. In phases in which only the intake valve VT is actuated (solenoid valve 24A always closed) all the fluid under pressure displaced by the pumping piston would be transferred only to the actuator 21 of the intake valve VT. Therefore in this condition the intake valve VT would tend to have a maximum lift and in general a lift profile corresponding to the double of the standard lift cycle in which the fluid displaced by the pumping piston is used for opening both the intake valves. For manufacturing reasons, it is not admissible that the maximum lift of the one intake valve (or of an exhaust valve) overcomes a given value (such as 12 mm) so that according to the invention it is provided that the actuator 21 of the intake valve VT has not able in any case to move the valve beyond a predetermined threshold lift position. For this purpose, with reference to figure 14, the hydraulic actuator 21 of the intake valve VT associated to the intake conduit which is configured for generating a tumble motion is preferably provided with a discharge outlet which through a line L1 puts the chamber under pressure of actuator 21 to discharge when the movable member of the actuator is displaced through a length greater than a predetermined value. In this manner, it is prevented that the first intake valve VT has a lift greater than a maximum predetermined limit. When the valve reaches this limit value, its lift profile remains constant as long as the pumping piston 16 does not reverse its direction of movement, which induces a reduction of pressure within chamber C or as long as the controller does not cause a combination of openings of solenoid valves 24A and 24B such as to reduce the pressure in chamber C.

The same measure can be adopted in the embodiment of figure 13A.

The mode of operation shown in the left part of figure 15 is activated in the conditions of reduced operation of the engine, below a determined load of the engine and/or below a determined speed of revolution of the engine. In this condition, the solenoid valve 24B is maintained always opened, whereas the solenoid valve 24A is closed during the normal lift cycle of the cam, so that the actuator 21 of the intake valve VT is sensitive to the movement of the cam, whereas the intake valve VS, since it is isolated with respect to the pressure chamber C, remains always stationary in its closed position, also because its actuator communicates to the discharge channel 270, due to that the solenoid valve 24B is opened. In particular, in the case of particularly reduced engine loads and a relatively large combustion chambers, it might be preferable to open even only partially the valve VT, while maintaining anyhow closed the valve VS.

In an intermediate condition of operation of the engine, the mode of operation shown in the central part of figure 15, of the mode of operation shown in the right part of figure 15, can be activated.

With reference to the mode shown in the central part of figure 15, in this case, at the beginning of the lift cycle of the cam, only the solenoid valve 24B is closed, so as to interrupt the communication of both the actuators 21 with the discharge channel, whereas the two actuators are in communication with the pressure chamber C. Therefore, both the intake valves VT, VS start their normal lift cycle. In an intermediate phase of the lift cycle of the cam, the solenoid valve 24A is closed so as to interrupt the communication between the branch-off point D1 and the branch-off point D2. As a result of this, the intake valve VT continues its lift cycle, thus reaching a lift which is anyhow greater than TL, whereas the intake valve VS is isolated both with respect to the pressure chamber C (solenoid valve 24A closed) and with respect to the discharge channel (solenoid valve 24B closed) remains in a stationary position corresponding to the reached partial opening position (in figure 15 by dotted line there are shown different degrees of lift of valve VS which can be obtained by varying the closing time of solenoid valve 24A). At the end of the lift cycle of the cam, both the solenoid valves 24A, 24B are opened thus establishing again the communication of both of the actuators 21 whit the discharge channel 270, so as to enable a normal complete closing of both the intake valves.

The mode of operation shown in the right part of figure 15 is a mode of operation in which the intake valve VT performs an initial lift cycle with a law of motion which is higher with respect to profile TL, since the solenoid 24A is closed whereas the intake valve VS is opened with the delay, that is when the solenoid valve 24A is opened and the solenoid valve 24B is closed, so that it performs a partial lift cycle after which it is closed simultaneously with the closing of the intake valve VT.

Both the solenoid valves are opened again at the final stage of the lift cycle of the cam, so as to enable closing of both the intake valves.

### Third embodiment of the invention

From a technical standpoint, the invention can be also actuated with a system for variable actuation of the intake valves according to the configuration diagrammatical shown in figure 16. In this embodiment, the actuation system is substantially duplicated, since it has two separate hydraulic circuits for actuating the intake valves VT, VS of each cylinder. In this case it is therefore necessary to provide two different pumping cylinders 16 for the two intake valves VT, VS, these cylinders being actuated by two respective cams (not shown). The system has two solenoid valves 24A, 24B of an on/off two-position type, of any known type, which control the communication of a respective pressure chamber C with the discharge channel 270. Each of the two pressure chambers C is in communication with the respective actuator 21 of a respective intake valve.

A variable actuation system of the type shown in figure 16 enables maximum flexibility to be obtained in terms of differentiated modes of operation for the two intake valves VT, VS, but naturally it implies a greater complication of the structure of the engine and a higher production costs.

However, the actuation system shown in figure 16 does not enable, when the valve VS is closed, an increased law of motion for the valve VT which is opened. Therefore, for introducing the same quantity of air into the cylinder it is necessary, when only valve VT is opened, to increase also the duration of the intake event which could have not the same beneficial effects from the standpoint of an increase of the momentum within the combustion chamber with respect to the cases shown in figures 13 and 14, which therefore represent preferred embodiments.

Figure 17 is a perspective view of the combustion chamber 2 of an engine cylinder, with the first intake conduit 4T, the second intake conduit 4S and the two exhaust conduits 6, in a representation in which the hollows are shown as solid parts.

Figure 18 is a perspective view of an exemplary embodiment of the second intake conduit VS, with a scroll-like portion 401 which gives the air flow a swirl motion around an axis substantially parallel to the cylinder axis.

Figure 19 is a schematic plan view of the combustion chamber 2. As already indicated, the intake conduit 4T is configured to generate a main tumble motion, a cross-tumble motion and a swirl motion (according to the illustrated S2 direction in figure 19). Still according to the invention, the intake conduit 4S has a scroll portion 401 configured in such a way as to generate a swirl motion with a direction of rotation S1 contrary to the direction of rotation S2 of the swirl motion induced by the first intake conduit 4T.

Studies and tests of the Applicant have shown that the solution according to the invention achieves a high Turbulent Kinetic Energy (TKE) inside the combustion chamber. A higher TKE value results in faster combustion propagation.

Naturally, while the principle of the invention remains the same, the embodiments and the details of construction may widely vary with respect to what has been described and shown purely by way of example, without departing from the scope of the present invention, as defined in the annexed claims.

For example, the hydraulic actuators of the two intake valves VT and VS could be not identical with each other, so that, for example, while being connected to the same pressure chamber C, in a conventional mode of operation the two intake valves would have laws of motion differentiated from each other.

## Claims

1. Internal combustion engine, comprising, for each cylinder:
- a combustion chamber,
- first and second intake conduits (4) and at least one exhaust conduit (6) opening on said combustion chamber,
- a first and a second intake valves (VT, VS) respectively associated to said first and second intake conduits and at least one exhaust valve (70) associated to said at least one exhaust conduit (4,6), said intake and exhaust valves being provided with respective return springs (9) which bias the valves towards a closed position,
- a camshaft (11) for actuating the intake valves (VT, VS), by means of respective tappets (15),
- wherein each intake valve (VT, VS) is driven by a respective tappet (15) against the action of said return spring (9) with the interposition of a hydraulic circuit including a volume of fluid under pressure (C) towards which a pumping piston (16) is facing which is associated to the valve tappet (15), said volume of fluid under pressure being adapted to communicate with the chamber of a hydraulic actuator (21) associated to said intake valve,
- each intake valve (VT, VS) being associated to at least one electrically-actuated control valve (24) adapted to communicate, when it is opened, said volume of fluid under pressure (C) to a low pressure discharge channel (23, 270), for the purpose of uncoupling said intake valve from the respective tappet (15) and causing a quick closing of said intake valve due to the action of the respective return spring (9),
- at least one electronic controller (25) for controlling said at least one control valve (24) for varying the opening and/or closing time and the lift of each intake valve as a function of one or more operative parameters of the engine,
wherein:
- said first intake conduit (4T) is configured so as to generate within the cylinder a main tumble motion of the airflow around a first tumble axis, substantially orthogonal to the cylinder axis (C1),
- said second intake conduit (4S) has a configuration such as to generate a swirl motion of the airflow within the cylinder around the cylinder axis (C1),
- said electronic controller (25) is configured and programmed for controlling said at least one control valve (24) so as to partially or entirely open the intake valve (VT) associated to said first intake conduit in a condition of reduced operation of the engine, below a predetermined engine load and/or below a predetermined engine rotational speed, and so as to always open both the intake valves (VT, VS) in the remaining conditions of operation of the engine,
said engine being **characterized in that**:
- said first intake conduit (4T) is configured so as to generate within the cylinder also a cross-tumble motion of the airflow around a second tumble axis, substantially orthogonal to said first tumble axis and orthogonal to the cylinder axis (C1), and a swirl motion (S2) around the cylinder axis (C1),
- said second intake conduit (4S) has a scroll-type configuration, so as to generate a swirl motion (S1) of the airflow within the cylinder around an axis parallel to the cylinder axis (C1), in a direction opposite to that of the swirl motion (S2) induced by the first intake conduit (4T).

2. Engine according to claim 1, **characterized in that** the two intake valves (VT, VS) of each cylinder are controlled by a single cam of said camshaft through a single hydraulic circuit and that the communication of the hydraulic actuators of the two intake valves with said discharge channel (23, 270) is controlled by a single electrically-actuated control valve (24) and that said control valve is a three-way three-position valve, comprising:
- an inlet (i) permanently communicating with said volume of fluid under pressure (C) and with the actuator of said first intake valve (VT), and
- two outlets (u1, u2) respectively communicating with the actuator of the second intake valve (VS) and with said discharge channel,
said control valve (24) having the following three operative positions:
- a first position (P1), in which the inlet (i) communicates with both the outlets (u1, u2), so that the chamber under pressure (C) and the actuators of both of the intake valves (VT, VS) are put to discharge, and the intake valves (VT, VS) are both maintained closed by their return springs,
- a second position (P2), in which the inlet (i) communicates only with the outlet (u1) connected to the actuator of the second intake valve (7) and does not communicate with the outlet (u2) connected to the discharge channel (23, 270), so that the volume of fluid under pressure (C) is isolated with respect to the discharge channel (23, 270) and the actuators of both the intake valves (VT, VS) communicate with the pressure volume (C), so that the intake valves (VT, VS) are both active, and
- a third position (P3), in which the inlet does not communicate with any of the two outlets (u1, u2) so that said pressure volume (C) is isolated with respect to the discharge channel and said first intake valve (7B) is active, whereas the second intake valve (7A) is isolated with respect to the pressure volume (C) and with respect to the discharge channel (23, 270).

3. Engine according to claim 1, **characterized in that** the two intake valves of each cylinder are controlled by a single cam of said camshaft through a single hydraulic circuit and that the communication of the hydraulic actuators of the two intake valves (VT, VS) with said discharge channel (23, 270) is controlled by two electrically-actuated control valves (24A, 24B), both of an on/off two-position type, arranged in series with each other along a hydraulic line (L) for communication between the pressure volume and the discharge channel,
wherein said communication hydraulic line (L) includes, starting from said pressure volume (C) towards said discharge channel (23, 270):
- a first branch-off point (D1) connected to the hydraulic actuator (21) of said first intake valve (VT) associated to said first intake conduit, which is configured for generating a *tumble* motion,
- a second branch-off point (D2) connected to the hydraulic actuator (21) of said second intake valve (VS) associated to said second intake conduit, which is configured for generating a *swirl* motion,
- wherein a first one (24B) of said control valves is arranged between said second branch-off point (D2) and the discharge channel (23, 270) so that when said first control valve is closed, the communication is anyway interrupted between the branch-off point (D2) and the discharge channel, whereas the second intake valve (VS) is not in communication with the discharge and is enabled to open if the corresponding actuator (21) is supplied with fluid under pressure,
- and in which the second control valve (24A) is arranged in said communication line (L) between said branch-off points (D1, D2),
so that when said second control valve (24A) is closed:
the actuator of the first intake valve (VT) is always in communication with the pressure volume (C), whereas its communication with the discharge channel (23, 270) is anyway interrupted, independently from the condition of operation of the first control valve (24B),
whereas the actuator (21) of the second intake valve (VS) is no longer in communication with the pressure volume (C), independently from the condition of operation of the first intake valve (24B).

4. Engine according to claim 1, **characterized in that** said camshaft comprises two separate cams for actuating the two intake valves of each cylinder respectively and **in that** to said two cams there are associated two separate tappets and two separate hydraulic circuits, including two respective electrically-actuated control valves (24A, 24B) each for controlling the communication of hydraulic actuator (21) of the respective intake valve with the discharge channel (270).

5. Engine according to claim 1, **characterized in that** said electronic controller is configured and programmed for controlling said at least one control valve (24), so that, at least in a intermediate condition of operation of the engine, above said condition of reduced operation, said second intake valve (VS) is controlled according to a partial opening mode, in which it performs a lift movement lower than its maximum lift.

6. Engine according to claim 5, **characterized in that** said electronic controller (25) is configured and programmed so that in said partial opening mode, said second intake valve (VS) remains in a stationary position, corresponding to a predetermined partial lift, during its opening cycle.

7. Engine according to claim 5, **characterized in that** said electronic controller (25) is configured and programmed so that in said partial opening mode of the second intake valve (VS) the latter is controlled according to a *late opening* mode, in which the valve is opened with a delay with respect to the start of the lift cycle caused by the profile of a respective actuating cam.

8. Engine according to claim 7, **characterized in that** said electronic controller (25) is configured and programmed so that in said *late opening* mode said second intake valve (VS) is again closed together with the first intake valve (VT) at the end of the lift cycle caused by the profile of the respective actuating cam.

9. Engine according to claim 5, **characterized in that** said electronic controller (25) is configured and programmed so that in said partial opening mode of the second intake valve (VS) it is controlled according to a *multi-lift* mode, in which it is opened partially and closed again completely many times during a same lift cycle of a respective actuation cam.

10. Engine according to claim 5, **characterized in that** said electronic controller (25) is configured and programmed so that in said partial opening mode of the second intake valve (VS) the valve is controlled according to a delayed closing mode, in which it is opened partially and closed again completely with a delay with respect to the end of a lift cycle of a respective actuating cam.

11. Engine according to claim 2 or 3, **characterized in that** the hydraulic actuator (21) of said first intake valve (VT) associated to said first intake conduit which is configured for generating a *tumble* motion, is provided with a discharge outlet which prevents said first intake valve from having a lift greater than a predetermined maximum limit when the fluid under pressure displaced by said pumping piston is transferred only to the actuator (21) of said first intake valve (VT).

12. Method for controlling the operation of an internal combustion engine, wherein said engine comprises, for each cylinder:
- a combustion chamber,
- a first and a second intake conduits (4) and at least one exhaust conduit (6) opening on said combustion chamber,
- a first and a second intake valves (VT, VS), respectively associated to said first and second intake conduits and at least one exhaust valve (70) associated to said at least one exhaust conduit (4,6), said intake and exhaust valves being provided with respective return springs (9) which bias the valve towards a closed position,
- a camshaft (11) for actuating the intake valves (VT, VS) by means of respective tappets (15),
- wherein each intake valve (VT, VS) is driven by a respective tappet (15) against the action of said return spring (9) with the interposition of hydraulic means including a volume of fluid under pressure (C) towards which a pumping piston (16) is facing which is associated to the valve tappet (15), said volume of fluid under pressure being adapted to communicate with the chamber of a hydraulic actuator (21) associated with said intake valve,
- each intake valve (VT, VS) being associated to at least one electrically-actuated control valve (24) adapted to communicate said volume of fluid under pressure (C) with a discharge channel (23, 270), for the purpose of uncoupling said intake valve from the respective tappet (15) and causing a quick closing of said intake valve due to the action of the respective return spring (9),
- at least one electronic controller (25) for controlling said at least one control valve (24) for varying the opening and/or closing time and the lift of each intake valve as a function of one or more operative parameters of the engine,
wherein:
- said first intake conduit (4T) is configured so as to generate within the cylinder a main tumble motion of the airflow around a first tumble axis, substantially orthogonal to the cylinder axis (C1),
- said second intake conduit (4S) has a configuration such as to generate a swirl motion of the airflow within the cylinder around the cylinder axis (C1),,
- said electronic controller (25) is configured and programmed for controlling said at least one control valve (24) so as to partially or entirely open the intake valve (VT) associated to said first intake conduit in a condition of reduced operation of the engine, below a predetermined engine load and/or below a predetermined engine rotational speed, and so as to always open both the intake valves (VT, VS) in the remaining conditions of operation of the engine,
said method being **characterized in that**:
- said first intake conduit (4T) is configured so as to generate within the cylinder also a cross-tumble motion of the airflow around a second tumble axis, substantially orthogonal to said first tumble axis and orthogonal to the cylinder axis (C1), and a swirl motion (S1) around the cylinder axis (C1),
- said second intake conduit (4S) has a scroll-type configuration, so as to generate a swirl motion (S2) of the airflow within the cylinder around an axis parallel to the cylinder axis (C1), in a direction opposite to that of the swirl motion (S1) induced by the first intake conduit (4T).

13. Method according to claim 12, **characterized in that** said electronic controller (25) controls said at least one control valve (24) so that at least in one intermediate condition of operation of the engine, above said condition of reduced operation, said second intake valve (VS) is controlled according to a partial lift mode, in which it performs a lift movement lower than its maximum lift.

14. Method according to claim 13, **characterized in that** in said partial lift mode, said second intake valve (VS) remains in a stationary position, corresponding to a predetermined partial lift, during its opening cycle.

15. Method according to claim 13, **characterized in that** in said partial lift mode of the second intake valve (VS), it is controlled according to a *late opening* mode, in which it is opened with a delay with respect to the start of the lift cycle determined by the profile of a respective actuating cam.

16. Method according to claim 15, **characterized in that** in said *late opening* mode, said second intake valve (VS) is again closed together with the first intake valve (VT) at the end of the lift cycle caused by the profile of the respective actuating cam.

17. Method according to claim 13, **characterized in that** in said partial lift mode of the second intake valve (VS), this valve is controlled according to a *multi-lift* mode, in which it is partially opened and closed again completely many times during a same lift cycle of a respective actuating cam.

18. Method according to claim 13, **characterized in that** in said partial lift mode of the second intake valve (VS), it is controlled according to a *delayed closing* mode, in which it is partially opened and closed again completely with a delay with respect to the end of a lift cycle of a respective actuating cam.

19. Method according to claim 12, **characterized in that** in the stages in which only said first intake valve (VT) associated to the intake conduit configured for generating a *tumble* motion, is opened, said first intake valve (VT) is prevented from having a lift greater than a maximum predetermined limit.

20. Method according to claim 12, **characterized in that** when only the first intake valve (VT) is opened, the time of starting opening of this valve is varied with respect to the start of the lift cycle of a respective actuating cam.

21. Method according to claim 12, **characterized in that**, when only the first intake valve (VT) is opened, this valve is opened when the piston of a respective cylinder of the engine has already a determined speed and/or has traveled through a predetermined distance, such as through one third of its total intake stroke.

22. Engine according to claim 1, wherein the hydraulic actuators (21) of the two intake valves are not identical with each other, so that when the two intake valves are actuated in a conventional mode in which both the valves are opened with a lift variation corresponding to the cam profile, they follow laws of motion which are different from each other.

## Patentansprüche

1. Brennkraftmaschine, umfassend, für jeden Zylinder:
- einen Brennraum,
- erste und zweite Ansaugrohre (4) und mindestens ein Abgasrohr (6), die in den Brennraum münden,
- ein erstes und ein zweites Einlassventil (VT, VS), die dem ersten beziehungsweise dem zweiten Ansaugrohr zugeordnet sind, und mindestens ein Auslassventil (70), das dem mindestens einen Abgasrohr (4, 6) zugeordnet ist, wobei die Einlass- und Auslassventile mit jeweiligen Rückholfedern (9) versehen sind, die die Ventile in Richtung einer geschlossenen Stellung vorspannen,
- eine Nockenwelle (11) zum Betätigen der Einlassventile (VT, VS) mithilfe jeweiliger Stößel (15),
- wobei jedes Einlassventil (VT, VS) von einem entsprechenden Stößel (15) entgegen der Wirkung der Rückholfeder (9) unter Zwischenschaltung eines Hydraulikkreises angetrieben wird, der ein druckbeaufschlagtes Fluidvolumen (C) umfasst, dem ein Pumpkolben (16) gegenüberliegt, der dem Ventilstößel (15) zugeordnet ist, wobei das druckbeaufschlagte Fluidvolumen dazu angepasst ist, mit der Kammer eines Hydraulikaktors (21) in Verbindung zu stehen, der dem Einlassventil zugeordnet ist,
- wobei jedes Einlassventil (VT, VS) mindestens einem elektrisch betätigten Steuerventil (24) zugeordnet ist, das dazu angepasst ist, wenn es geöffnet ist, das druckbeaufschlagte Fluidvolumen (C) mit einem Niederdruckableitungskanal (23, 270) zu verbinden, um das Einlassventil von dem jeweiligen Stößel (15) zu trennen und ein schnelles Schließen des Einlassventils durch die Wirkung der jeweiligen Rückholfeder (9) zu bewirken,
- mindestens eine elektronische Steuerung (25) zum Steuern des mindestens einen Steuerventils (24) zum Variieren der Öffnungs- und/oder Schließzeit und des Hubs jedes Einlassventils als Funktion von einem oder mehreren Betriebsparametern des Motors,
wobei:
- das erste Ansaugrohr (4T) dazu eingerichtet ist, in dem Zylinder eine primäre Tumble-Bewegung des Luftstroms um eine erste Tumble-Achse zu erzeugen, die im Wesentlichen orthogonal zu der Zylinderachse (C1) ist,
- das zweite Ansaugrohr (4S) eine derartige Ausgestaltung aufweist, dass es eine Drallbewegung des Luftstroms in dem Zylinder um die Zylinderachse (C1) erzeugt,
- die elektronische Steuerung (25) dazu eingerichtet und programmiert ist, das mindestens eine Steuerventil (24) zu steuern, um das dem ersten Ansaugrohr zugeordnete Einlassventil (VT) in einem Zustand reduzierten Betriebs des Motors unterhalb einer vorgegebenen Motorlast und/oder unterhalb einer vorgegebenen Motordrehzahl teilweise oder vollständig zu öffnen und um in den übrigen Betriebszuständen des Motors stets beide Einlassventile (VT, VS) zu öffnen,
wobei der Motor **dadurch gekennzeichnet ist, dass**:
- das erste Ansaugrohr (4T) dazu eingerichtet ist, in dem Zylinder auch eine Cross-Tumble-Bewegung des Luftstroms um eine zweite Tumble-Achse, die im Wesentlichen orthogonal zu der ersten Tumble-Achse und orthogonal zu der Zylinderachse (C1) ist, und eine Drallbewegung (S2) um die Zylinderachse (C1) zu erzeugen,
- das zweite Ansaugrohr (4S) eine schneckenartige Ausgestaltung aufweist, um eine Drallbewegung (S1) des Luftstroms in dem Zylinder um eine zu der Zylinderachse (C1) parallele Achse in einer Richtung zu erzeugen, die derjenigen der durch das erste Ansaugrohr (4T) bewirkten Drallbewegung (S2) entgegengesetzt ist.

2. Motor nach Anspruch 1, **dadurch gekennzeichnet, dass** die zwei Einlassventile (VT, VS) von jedem Zylinder von einem einzigen Nocken der Nockenwelle mittels eines einzigen Hydraulikkreises gesteuert werden, und dadurch, dass die Verbindung der Hydraulikaktoren der zwei Einlassventile mit dem Ableitungskanal (23, 270) von einem einzigen elektrisch betätigten Steuerventil (24) gesteuert wird, und dadurch, dass das Steuerventil ein Dreiwege-Dreistellungs-Ventil ist, umfassend:
- einen Einlass (i), der ständig mit dem druckbeaufschlagten Fluidvolumen (C) und dem Aktor des ersten Einlassventils (VT) in Verbindung steht, und
- zwei Auslässe (u1, u2), die jeweils mit dem Aktor des zweiten Einlassventils (VS) und mit dem Ableitungskanal in Verbindung stehen,
wobei das Steuerventil (24) die folgenden drei Betriebsstellungen hat:
- eine erste Stellung (P1), in der der Einlass (i) mit beiden Auslässen (u1, u2) in Verbindung steht, sodass die druckbeaufschlagte Kammer (C) und die Aktoren von beiden Einlassventilen (VT, VS) auf Auslass gestellt sind und die Einlassventile (VT, VS) beide von ihren Rückholfedern geschlossen gehalten werden,
- eine zweite Stellung (P2), in der der Einlass (i) nur mit dem Auslass (u1), der mit dem Aktor des zweiten Einlassventils (7) verbunden ist, in Verbindung steht und nicht mit dem Auslass (u2), der mit dem Ableitungskanal (23, 270) verbunden ist, in Verbindung steht, sodass das druckbeaufschlagte Fluidvolumen (C) gegenüber dem Ableitungskanal (23, 270) isoliert ist und die Aktoren beider Einlassventile (VT, VS) mit dem Druckvolumen (C) in Verbindung stehen, sodass die Einlassventile (VT, VS) beide aktiv sind, und
- eine dritte Stellung (P3), in der der Einlass mit keinem der zwei Auslässe (u 1, u2) in Verbindung steht, sodass das Druckvolumen (C) gegenüber dem Ableitungskanal isoliert ist und das erste Einlassventil (7B) aktiv ist, während das zweite Einlassventil (7A) gegenüber dem Druckvolumen (C) und gegenüber dem Ableitungskanal (23, 270) isoliert ist.

3. Motor nach Anspruch 1, **dadurch gekennzeichnet, dass** die zwei Einlassventile von jedem Zylinder von einem einzigen Nocken der Nockenwelle mittels eines einzigen Hydraulikkreises gesteuert werden, und dadurch, dass die Verbindung der Hydraulikaktoren der zwei Einlassventile (VT, VS) mit dem Ableitungskanal (23, 270) von zwei elektrisch betätigten Steuerventilen (24A, 24B) - beide vom Ein-Aus-Zweistellungs-Typ - gesteuert wird, die in Reihe miteinander entlang einer Hydraulikleitung (L) für die Verbindung zwischen dem Druckvolumen und dem Ableitungskanal angeordnet sind,
wobei die Verbindungshydraulikleitung (L) umfasst, ausgehend vom Druckvolumen (C) hin zum Ableitungskanal (23, 270):
- einen ersten Abzweigpunkt (D1), der mit dem Hydraulikaktor (21) des ersten Einlassventils (VT) verbunden ist, das dem ersten Ansaugrohr zugeordnet ist, das zum Erzeugen einer Tumble-Bewegung ausgestaltet ist,
- einen zweiten Abzweigpunkt (D2), der mit dem Hydraulikaktor (21) des zweiten Einlassventils (VS) verbunden ist, das dem zweiten Ansaugrohr zugeordnet ist, das zum Erzeugen einer Drallbewegung ausgestaltet ist,
- wobei ein erstes (24B) der Steuerventile zwischen dem zweiten Abzweigpunkt (D2) und dem Ableitungskanal (23, 270) angeordnet ist, sodass, wenn das erste Steuerventil geschlossen ist, die Verbindung zwischen dem Abzweigpunkt (D2) und dem Ableitungskanal in jedem Fall unterbrochen ist, während das zweite Einlassventil (VS) nicht mit dem Auslass in Verbindung steht und sich öffnen kann, wenn der entsprechende Aktor (21) mit druckbeaufschlagtem Fluid versorgt wird,
- und wobei das zweite Steuerventil (24A) in der Verbindungsleitung (L) zwischen den Abzweigpunkten (D1, D2) angeordnet ist,
sodass, wenn das zweite Steuerventil (24A) geschlossen ist:
der Aktor des ersten Einlassventils (VT) stets mit dem Druckvolumen (C) in Verbindung steht, während seine Verbindung mit dem Ableitungskanal (23, 270) in jedem Fall unterbrochen ist, unabhängig vom Betriebszustand des ersten Steuerventils (24B),
während der Aktor (21) des zweiten Einlassventils (VS) nicht mehr mit dem Druckvolumen (C) in Verbindung steht, unabhängig vom Betriebszustand des ersten Einlassventils (24B).

4. Motor nach Anspruch 1, **dadurch gekennzeichnet, dass** die Nockenwelle zwei separate Nocken zum jeweiligen Betätigen der zwei Einlassventile jedes Zylinders umfasst, und dadurch, dass den zwei Nocken zwei separate Stößel und zwei separate Hydraulikkreise zugeordnet sind, umfassend zwei entsprechende elektrisch betätigte Steuerventile (24A, 24B) jeweils zum Steuern der Verbindung des Hydraulikaktors (21) des jeweiligen Einlassventils mit dem Ableitungskanal (270).

5. Motor nach Anspruch 1, **dadurch gekennzeichnet, dass** die elektronische Steuerung zum Steuern des mindestens einen Steuerventils (24) eingerichtet und programmiert ist, sodass das zweite Einlassventil (VS) zumindest in einem Zwischenbetriebszustand des Motors oberhalb des Zustands reduzierten Betriebs gemäß einem Teilöffnungsmodus gesteuert wird, in dem es eine Hubbewegung ausführt, die kleiner als sein maximaler Hub ist.

6. Motor nach Anspruch 5, **dadurch gekennzeichnet, dass** die elektronische Steuerung (25) derart eingerichtet und programmiert ist, dass das zweite Einlassventil (VS) im Teilöffnungsmodus während seines Öffnungszyklus in einer stationären Stellung verbleibt, die einem vorgegebenen Teilhub entspricht.

7. Motor nach Anspruch 5, **dadurch gekennzeichnet, dass** die elektronische Steuerung (25) derart eingerichtet und programmiert ist, dass im Teilöffnungsmodus des zweiten Einlassventils (VS) letzteres gemäß einem Spätöffnungsmodus gesteuert wird, in dem das Ventil mit einer Verzögerung gegenüber dem Beginn des Hubzyklus geöffnet wird, der durch das Profil eines entsprechenden Betätigungsnockens bewirkt wird.

8. Motor nach Anspruch 7, **dadurch gekennzeichnet, dass** die elektronische Steuerung (25) derart eingerichtet und programmiert ist, dass das zweite Einlassventil (VS) im Spätöffnungsmodus wieder zusammen mit dem ersten Einlassventil (VT) am Ende des Hubzyklus geschlossen wird, der durch das Profil des entsprechenden Betätigungsnockens bewirkt wird.

9. Motor nach Anspruch 5, **dadurch gekennzeichnet, dass** die elektronische Steuerung (25) derart eingerichtet und programmiert ist, dass im Teilöffnungsmodus des zweiten Einlassventils (VS) dieses gemäß einem Mehrfachhubmodus gesteuert wird, in dem es während ein und desselben Hubzyklus eines entsprechenden Betätigungsnockens viele Male teilweise geöffnet und wieder vollständig geschlossen wird.

10. Motor nach Anspruch 5, **dadurch gekennzeichnet, dass** die elektronische Steuerung (25) derart eingerichtet und programmiert ist, dass im Teilöffnungsmodus des zweiten Einlassventils (VS) das Ventil gemäß einem Verzögerungsschließmodus gesteuert wird, in dem es mit einer Verzögerung gegenüber dem Ende eines Hubzyklus eines entsprechenden Betätigungsnockens teilweise geöffnet und wieder vollständig geschlossen wird.

11. Motor nach Anspruch 2 oder 3, **dadurch gekennzeichnet, dass** der Hydraulikaktor (21) des ersten Einlassventils (VT), das dem ersten Ansaugrohr zugeordnet ist, das zum Erzeugen einer Tumble-Bewegung ausgestaltet ist, mit einem Ableitauslass versehen ist, der verhindert, dass das erste Einlassventil einen Hub hat, der größer als eine vorgegebene Obergrenze ist, wenn das von dem Pumpkolben verdrängte druckbeaufschlagte Fluid nur an den Aktor (21) des ersten Einlassventils (VT) übertragen wird.

12. Verfahren zum Steuern des Betriebs einer Brennkraftmaschine, wobei der Motor für jeden Zylinder umfasst:
- einen Brennraum,
- ein erstes und ein zweites Ansaugrohr (4) und mindestens ein Abgasrohr (6), die in den Brennraum münden,
- ein erstes und ein zweites Einlassventil (VT, VS), die dem ersten beziehungsweise dem zweiten Ansaugrohr zugeordnet sind, und mindestens ein Auslassventil (70), das dem mindestens einen Abgasrohr (4, 6) zugeordnet ist,
wobei die Einlass- und Auslassventile mit jeweiligen Rückholfedern (9) versehen sind, die das Ventil in Richtung einer geschlossenen Stellung vorspannen,
- eine Nockenwelle (11) zum Betätigen der Einlassventile (VT, VS) mithilfe jeweiliger Stößel (15),
- wobei jedes Einlassventil (VT, VS) von einem entsprechenden Stößel (15) entgegen der Wirkung der Rückholfeder (9) unter Zwischenschaltung von Hydraulikmitteln angetrieben wird, die ein druckbeaufschlagtes Fluidvolumen (C) umfassen, dem ein Pumpkolben (16) gegenüberliegt, der dem Ventilstößel (15) zugeordnet ist, wobei das druckbeaufschlagte Fluidvolumen dazu angepasst ist, mit der Kammer eines Hydraulikaktors (21) in Verbindung zu stehen, der dem Einlassventil zugeordnet ist,
- wobei jedes Einlassventil (VT, VS) mindestens einem elektrisch betätigten Steuerventil (24) zugeordnet ist, das dazu angepasst ist, das druckbeaufschlagte Fluidvolumen (C) mit einem Ableitungskanal (23, 270) zu verbinden, um das Einlassventil von dem jeweiligen Stößel (15) zu trennen und ein schnelles Schließen des Einlassventils durch die Wirkung der jeweiligen Rückholfeder (9) zu bewirken,
- mindestens eine elektronische Steuerung (25) zum Steuern des mindestens einen Steuerventils (24) zum Variieren der Öffnungs- und/oder Schließzeit und des Hubs jedes Einlassventils als Funktion von einem oder mehreren Betriebsparametern des Motors,
wobei:
- das erste Ansaugrohr (4T) dazu eingerichtet ist, in dem Zylinder eine primäre Tumble-Bewegung des Luftstroms um eine erste Tumble-Achse zu erzeugen, die im Wesentlichen orthogonal zu der Zylinderachse (C1) ist,
- das zweite Ansaugrohr (4S) eine derartige Ausgestaltung aufweist, dass es eine Drallbewegung des Luftstroms in dem Zylinder um die Zylinderachse (C1) erzeugt,
- die elektronische Steuerung (25) dazu eingerichtet und programmiert ist, das mindestens eine Steuerventil (24) zu steuern, um das dem ersten Ansaugrohr zugeordnete Einlassventil (VT) in einem Zustand reduzierten Betriebs des Motors unterhalb einer vorgegebenen Motorlast und/oder unterhalb einer vorgegebenen Motordrehzahl teilweise oder vollständig zu öffnen und um in den übrigen Betriebszuständen des Motors stets beide Einlassventile (VT, VS) zu öffnen,
wobei dieses Verfahren **dadurch gekennzeichnet ist, dass**:
- das erste Ansaugrohr (4T) dazu eingerichtet ist, in dem Zylinder auch eine Cross-Tumble-Bewegung des Luftstroms um eine zweite Tumble-Achse, die im Wesentlichen orthogonal zu der ersten Tumble-Achse und orthogonal zu der Zylinderachse (C1) ist, und eine Drallbewegung (S1) um die Zylinderachse (C1) zu erzeugen,
- das zweite Ansaugrohr (4S) eine schneckenartige Ausgestaltung aufweist, um eine Drallbewegung (S2) des Luftstroms in dem Zylinder um eine zu der Zylinderachse (C1) parallele Achse in einer Richtung zu erzeugen, die derjenigen der durch das erste Ansaugrohr (4T) bewirkten Drallbewegung (S1) entgegengesetzt ist.

13. Verfahren nach Anspruch 12, **dadurch gekennzeichnet, dass** die elektronische Steuerung (25) das mindestens eine Steuerventil (24) steuert, sodass das zweite Einlassventil (VS) zumindest in einem Zwischenbetriebszustand des Motors oberhalb des Zustands reduzierten Betriebs gemäß einem Teilhubmodus gesteuert wird, in dem es eine Hubbewegung ausführt, die kleiner als sein maximaler Hub ist.

14. Verfahren nach Anspruch 13, **dadurch gekennzeichnet, dass** das zweite Einlassventil (VS) im Teilhubmodus während seines Öffnungszyklus in einer stationären Stellung verbleibt, die einem vorgegebenen Teilhub entspricht.

15. Verfahren nach Anspruch 13, **dadurch gekennzeichnet, dass** im Teilhubmodus des zweiten Einlassventils (VS) dieses gemäß einem Spätöffnungsmodus gesteuert wird, in dem es mit einer Verzögerung gegenüber dem Beginn des Hubzyklus geöffnet wird, der vom Profil eines entsprechenden Betätigungsnockens bestimmt wird.

16. Verfahren nach Anspruch 15, **dadurch gekennzeichnet, dass** das zweite Einlassventil (VS) im Spätöffnungsmodus wieder zusammen mit dem ersten Einlassventil (VT) am Ende des Hubzyklus geschlossen wird, der durch das Profil des entsprechenden Betätigungsnockens bewirkt wird.

17. Verfahren nach Anspruch 13, **dadurch gekennzeichnet, dass** im Teilhubmodus des zweiten Einlassventils (VS) dieses Ventil gemäß einem Mehrfachhubmodus gesteuert wird, in dem es während ein und desselben Hubzyklus eines entsprechenden Betätigungsnockens viele Male teilweise geöffnet und wieder vollständig geschlossen wird.

18. Verfahren nach Anspruch 13, **dadurch gekennzeichnet, dass** im Teilöffnungsmodus des zweiten Einlassventils (VS) dieses gemäß einem Verzögerungsschließmodus gesteuert wird, in dem es mit einer Verzögerung gegenüber dem Ende eines Hubzyklus eines entsprechenden Betätigungsnockens teilweise geöffnet und wieder vollständig geschlossen wird.

19. Verfahren nach Anspruch 12, **dadurch gekennzeichnet, dass** in den Phasen, in denen nur das erste Einlassventil (VT), das dem zum Erzeugen einer Tumble-Bewegung ausgestalteten Ansaugrohr zugeordnet ist, geöffnet wird, verhindert wird, dass das erste Einlassventil (VT) einen Hub hat, der größer als eine vorgegebene Obergrenze ist.

20. Verfahren nach Anspruch 12, **dadurch gekennzeichnet, dass**, wenn nur das erste Einlassventil (VT) geöffnet wird, der Zeitpunkt des Öffnungsbeginns dieses Ventils gegenüber dem Beginn des Hubzyklus eines entsprechenden Betätigungsnockens variiert wird.

21. Verfahren nach Anspruch 12, **dadurch gekennzeichnet, dass**, wenn nur das erste Einlassventil (VT) geöffnet wird, dieses Ventil geöffnet wird, wenn der Kolben eines entsprechenden Zylinders des Motors bereits eine bestimmte Geschwindigkeit hat und/oder eine vorgegebene Strecke durchlaufen hat, wie etwa ein Drittel seines Gesamtansaughubs.

22. Motor nach Anspruch 1, wobei die Hydraulikaktoren (21) der zwei Einlassventile nicht miteinander identisch sind, sodass die zwei Einlassventile, wenn sie in einem herkömmlichen Modus betätigt werden, in dem beide Ventile mit einer dem Nockenprofil entsprechenden Hubänderung geöffnet werden, Bewegungsgesetzen folgen, die voneinander verschieden sind.

## Revendications

1. Moteur à combustion interne, comprenant, pour chaque cylindre :
- une chambre de combustion,
- des premier et deuxième conduits d'admission (4) et au moins un conduit d'échappement (6) débouchant sur ladite chambre de combustion,
- une première et une deuxième soupapes d'admission (VT, VS) respectivement associées auxdits premier et deuxième conduits d'admission et au moins une soupape d'échappement (70) associée audit au moins un conduit d'échappement (4, 6), lesdites soupapes d'admission et d'échappement étant pourvues de ressorts de rappel respectifs (9) qui sollicitent les soupapes vers une position fermée,
- un arbre à cames (11) pour actionner les soupapes d'admission (VT, VS), au moyen de poussoirs respectifs (15),
- dans lequel chaque soupape d'admission (VT, VS) est entraînée par un poussoir respectif (15) contre l'action dudit ressort de rappel (9) avec l'interposition d'un circuit hydraulique comprenant un volume de fluide sous pression (C) vers lequel est tourné un piston de pompage (16) qui est associé au poussoir de soupape (15), ledit volume de fluide sous pression étant adapté pour communiquer avec la chambre d'un actionneur hydraulique (21) associé à ladite soupape d'admission,
- chaque soupape d'admission (VT, VS) étant associée à au moins une soupape de commande à actionnement électrique (24) adaptée pour communiquer, lors de son ouverture, ledit volume de fluide sous pression (C) à un canal de refoulement basse pression (23, 270), dans le but de désaccoupler ladite soupape d'admission du poussoir respectif (15) et de provoquer une fermeture rapide de ladite soupape d'admission grâce à l'action du ressort de rappel respectif (9),
- au moins un dispositif de commande électronique (25) pour commander ladite au moins une soupape de commande (24) pour faire varier le temps d'ouverture et/ou de fermeture et la levée de chaque soupape d'admission en fonction d'un ou de plusieurs paramètres de fonctionnement du moteur,
dans lequel :
- ledit premier conduit d'admission (4T) est configuré de manière à générer à l'intérieur du cylindre un mouvement de tourbillon transversal principal de l'écoulement d'air autour d'un premier axe de tourbillon transversal, sensiblement orthogonal à l'axe de cylindre (C1),
- ledit deuxième conduit d'admission (4S) a une configuration permettant de générer un mouvement de tourbillon longitudinal de l'écoulement d'air à l'intérieur du cylindre autour de l'axe de cylindre (C1),
- ledit dispositif de commande électronique (25) est configuré et programmé pour commander ladite au moins une soupape de commande (24) de manière à ouvrir partiellement ou entièrement la soupape d'admission (VT) associée audit premier conduit d'admission dans une condition de fonctionnement réduit du moteur, en dessous d'une charge de moteur prédéterminée et/ou en dessous d'une vitesse de rotation de moteur prédéterminée, et de manière à toujours ouvrir les deux soupapes d'admission (VT, VS) dans les conditions de fonctionnement restantes du moteur,
ledit moteur étant **caractérisé en ce que** :
- ledit premier conduit d'admission (4T) est configuré de manière à générer également à l'intérieur du cylindre un mouvement de tourbillon transversal croisé de l'écoulement d'air autour d'un deuxième axe de tourbillon transversal, sensiblement orthogonal audit premier axe de tourbillon transversal et orthogonal à l'axe de cylindre (C1), et un mouvement de tourbillon longitudinal (S2) autour de l'axe de cylindre (C1),
- ledit deuxième conduit d'admission (4S) a une configuration de type spirale, de manière à générer un mouvement de tourbillon transversal (S1) de l'écoulement d'air à l'intérieur du cylindre autour d'un axe parallèle à l'axe de cylindre (C1), dans une direction opposée à celle du mouvement de tourbillon longitudinal (S2) induit par le premier conduit d'admission (4T).

2. Moteur selon la revendication 1, **caractérisé en ce que** les deux soupapes d'admission (VT, VS) de chaque cylindre sont commandées par une seule came dudit arbre à cames à travers un seul circuit hydraulique et que la communication des actionneurs hydrauliques des deux soupapes d'admission avec ledit canal de refoulement (23, 270) est commandée par une seule soupape de commande à actionnement électrique (24) et que ladite soupape de commande est une soupape à trois voies et trois positions, comprenant :
- une entrée (i) communiquant en permanence avec ledit volume de fluide sous pression (C) et avec l'actionneur de ladite première soupape d'admission (VT), et
- deux sorties (u1, u2) communiquant respectivement avec l'actionneur de la deuxième soupape d'admission (VS) et avec ledit canal de refoulement, ladite soupape de commande (24) ayant les trois positions de fonctionnement suivantes :
- une première position (P1), dans laquelle l'entrée (i) communique avec les deux sorties (u1, u2), de sorte que la chambre sous pression (C) et les actionneurs des deux soupapes d'admission (VT, VS) soient mis au refoulement, et
les soupapes d'admission (VT, VS) sont toutes deux maintenues fermées par leurs ressorts de rappel,
- une deuxième position (P2), dans laquelle l'entrée (i) communique uniquement avec la sortie (u1) reliée à l'actionneur de la deuxième soupape d'admission (7) et ne communique pas avec la sortie (u2) reliée au canal de refoulement (23, 270), de sorte que le volume de fluide sous pression (C) soit isolé par rapport au canal de refoulement (23, 270) et les actionneurs des deux soupapes d'admission (VT, VS) communiquent avec le volume sous pression (C), de sorte que les soupapes d'admission (VT, VS) soient toutes deux actives, et
- une troisième position (P3), dans laquelle l'entrée ne communique avec aucune des deux sorties (u1, u2) de sorte que ledit volume sous pression (C) soit isolé par rapport au canal de refoulement et ladite première soupape d'admission (7B) soit active, tandis que la deuxième soupape d'admission (7A) est isolée par rapport au volume sous pression (C) et par rapport au canal de refoulement (23, 270).

3. Moteur selon la revendication 1, **caractérisé en ce que** les deux soupapes d'admission de chaque cylindre sont commandées par une seule came dudit arbre à cames à travers un seul circuit hydraulique et que la communication des actionneurs hydrauliques des deux soupapes d'admission (VT, VS) avec ledit canal de refoulement (23, 270) est commandée par deux soupapes de commande à actionnement électrique (24A, 24B), toutes deux du type à deux positions marche/arrêt, agencées en série l'une avec l'autre le long d'une conduite hydraulique (L) pour la communication entre le volume sous pression et le canal de refoulement,
dans lequel ladite conduite hydraulique de communication (L) comprend, en partant dudit volume sous pression (C) vers ledit canal de refoulement (23, 270) :
- un premier point de dérivation (D1) relié à l'actionneur hydraulique (21) de ladite première soupape d'admission (VT) associée audit premier conduit d'admission, qui est configuré pour générer un mouvement de *tourbillon transversal,*
- un deuxième point de dérivation (D2) relié à l'actionneur hydraulique (21) de ladite deuxième soupape d'admission (VS) associée audit deuxième conduit d'admission, qui est configuré pour générer un mouvement de *tourbillon longitudinal,*
- dans lequel une première soupape (24B) desdites soupapes de commande est agencée entre ledit deuxième point de dérivation (D2) et le canal de refoulement (23, 270) de sorte que lorsque ladite première soupape de commande est fermée, la communication soit de toute façon interrompue entre le point de dérivation (D2) et le canal de refoulement, tandis que la deuxième soupape d'admission (VS) n'est pas en communication avec le refoulement et peut s'ouvrir si l'actionneur (21) correspondant est alimenté en fluide sous pression,
- et dans lequel la deuxième soupape de commande (24A) est agencée dans ladite conduite de communication (L) entre lesdits points de dérivation (D1, D2),
de sorte que lorsque ladite deuxième soupape de commande (24A) est fermée :
l'actionneur de la première soupape d'admission (VT) soit toujours en communication avec le volume sous pression (C), tandis que sa communication avec le canal de refoulement (23, 270) est de toute façon interrompue, indépendamment de la condition de fonctionnement de la première soupape de commande (24B),
tandis que l'actionneur (21) de la deuxième soupape d'admission (VS) n'est plus en communication avec le volume sous pression (C), indépendamment de la condition de fonctionnement de la première soupape d'admission (24B).

4. Moteur selon la revendication 1, **caractérisé en ce que** ledit arbre à cames comprend deux cames distinctes pour actionner respectivement les deux soupapes d'admission de chaque cylindre et **en ce qu'**auxdites deux cames sont associés deux poussoirs distincts et deux circuits hydrauliques distincts, comprenant deux soupapes de commande à actionnement électrique respectives (24A, 24B) chacune destinée à commander la communication de l'actionneur hydraulique (21) de la soupape d'admission respective avec le canal de refoulement (270).

5. Moteur selon la revendication 1, **caractérisé en ce que** ledit dispositif de commande électronique est configuré et programmé pour commander ladite au moins une soupape de commande (24), de sorte que, au moins dans une condition de fonctionnement intermédiaire du moteur, au-dessus de ladite condition de fonctionnement réduit, ladite deuxième soupape d'admission (VS) soit commandée selon un mode d'ouverture partielle, dans lequel elle effectue un mouvement de levée inférieur à sa levée maximale.

6. Moteur selon la revendication 5, **caractérisé en ce que** ledit dispositif de commande électronique (25) est configuré et programmé de sorte que dans ledit mode d'ouverture partielle, ladite deuxième soupape d'admission (VS) reste dans une position fixe, correspondant à une levée partielle prédéterminée, pendant son cycle d'ouverture.

7. Moteur selon la revendication 5, **caractérisé en ce que** ledit dispositif de commande électronique (25) est configuré et programmé de sorte que dans ledit mode d'ouverture partielle de la deuxième soupape d'admission (VS) cette dernière soit commandée selon un mode *d'ouverture tardive,* dans lequel la soupape est ouverte avec un retard par rapport au début du cycle de levée provoqué par le profil d'une came d'actionnement respective.

8. Moteur selon la revendication 7, **caractérisé en ce que** ledit dispositif de commande électronique (25) est configuré et programmé de sorte que dans ledit mode *d'ouverture tardive* ladite deuxième soupape d'admission (VS) soit fermée à nouveau conjointement avec la première soupape d'admission (VT) à la fin du cycle de levée provoqué par le profil de la came d'actionnement respective.

9. Moteur selon la revendication 5, **caractérisé en ce que** ledit dispositif de commande électronique (25) est configuré et programmé de sorte que dans ledit mode d'ouverture partielle de la deuxième soupape d'admission (VS), elle soit commandée selon un mode *multi-levée,* dans lequel elle est partiellement ouverte et fermée à nouveau complètement plusieurs fois pendant un même cycle de levée d'une came d'actionnement respective.

10. Moteur selon la revendication 5, **caractérisé en ce que** ledit dispositif de commande électronique (25) est configuré et programmé de sorte que dans ledit mode d'ouverture partielle de la deuxième soupape d'admission (VS) la soupape soit commandée selon un mode de fermeture retardée, dans lequel elle est partiellement ouverte et fermée à nouveau complètement avec un retard par rapport à la fin d'un cycle de levée d'une came d'actionnement respective.

11. Moteur selon la revendication 2 ou 3, **caractérisé en ce que** l'actionneur hydraulique (21) de ladite première soupape d'admission (VT) associée audit premier conduit d'admission qui est configuré pour générer un mouvement de *tourbillon transversal,* est pourvu d'une sortie de refoulement qui empêche ladite première soupape d'admission d'avoir une levée supérieure à une limite maximale prédéterminée lorsque le fluide sous pression déplacé par ledit piston de pompage est transféré uniquement à l'actionneur (21) de ladite première soupape d'admission (VT).

12. Procédé de commande du fonctionnement d'un moteur à combustion interne, dans lequel ledit moteur comprend, pour chaque cylindre :
- une chambre de combustion,
- un premier et un deuxième conduits d'admission (4) et au moins un conduit d'échappement (6) débouchant sur ladite chambre de combustion,
- une première et une deuxième soupapes d'admission (VT, VS), respectivement associées auxdits premier et deuxième conduits d'admission et au moins une soupape d'échappement (70) associée audit au moins un conduit d'échappement (4, 6), lesdites soupapes d'admission et d'échappement étant pourvues de ressorts de rappel respectifs (9) qui sollicitent la soupape vers une position fermée,
- un arbre à cames (11) pour actionner les soupapes d'admission (VT, VS) au moyen de poussoirs respectifs (15),
- dans lequel chaque soupape d'admission (VT, VS) est entraînée par un poussoir respectif (15) contre l'action dudit ressort de rappel (9) avec l'interposition de moyens hydrauliques comprenant un volume de fluide sous pression (C) vers lequel est tourné un piston de pompage (16) qui est associé au poussoir de soupape (15), ledit volume de fluide sous pression étant adapté pour communiquer avec la chambre d'un actionneur hydraulique (21) associé à ladite soupape d'admission,
- chaque soupape d'admission (VT, VS) étant associée à au moins une soupape de commande à actionnement électrique (24) adaptée pour communiquer ledit volume de fluide sous pression (C) à un canal de refoulement (23, 270), dans le but de désaccoupler ladite soupape d'admission du poussoir respectif (15) et de provoquer une fermeture rapide de ladite soupape d'admission grâce à l'action du ressort de rappel respectif (9),
- au moins un dispositif de commande électronique (25) pour commander ladite au moins une soupape de commande (24) pour faire varier le temps d'ouverture et/ou de fermeture et la levée de chaque soupape d'admission en fonction d'un ou de plusieurs paramètres de fonctionnement du moteur,
dans lequel :
- ledit premier conduit d'admission (4T) est configuré de manière à générer à l'intérieur du cylindre un mouvement de tourbillon transversal principal de l'écoulement d'air autour d'un premier axe de tourbillon transversal, sensiblement orthogonal à l'axe de cylindre (C1),
- ledit deuxième conduit d'admission (4S) a une configuration telle qu'il génère un mouvement de tourbillon longitudinal de l'écoulement d'air à l'intérieur du cylindre autour de l'axe de cylindre (C1),
- ledit dispositif de commande électronique (25) est configuré et programmé pour commander ladite au moins une soupape de commande (24) de manière à ouvrir partiellement ou entièrement la soupape d'admission (VT) associée audit premier conduit d'admission dans une condition de fonctionnement réduit du moteur, en dessous d'une charge de moteur prédéterminée et/ou en dessous d'une vitesse de rotation de moteur prédéterminée, et de manière à toujours ouvrir les deux soupapes d'admission (VT, VS) dans les conditions de fonctionnement restantes du moteur,
ledit procédé étant **caractérisé en ce que** :
- ledit premier conduit d'admission (4T) est configuré de manière à générer également à l'intérieur du cylindre un mouvement de tourbillon transversal croisé de l'écoulement d'air autour d'un deuxième axe de tourbillon transversal, sensiblement orthogonal audit premier axe de tourbillon transversal et orthogonal à l'axe de cylindre (C1), et un mouvement de tourbillon longitudinal (S1) autour de l'axe de cylindre (C1),
- ledit deuxième conduit d'admission (4S) a une configuration de type spirale, de manière à générer un mouvement de tourbillon longitudinal (S2) de l'écoulement d'air à l'intérieur du cylindre autour d'un axe parallèle à l'axe de cylindre (C1), dans une direction opposée à celle du mouvement de tourbillon longitudinal (S1) induit par le premier conduit d'admission (4T).

13. Procédé selon la revendication 12, **caractérisé en ce que** ledit dispositif de commande électronique (25) commande ladite au moins une soupape de commande (24) de sorte qu'au moins dans une condition intermédiaire de fonctionnement du moteur, au-dessus de ladite condition de fonctionnement réduit, ladite deuxième soupape d'admission (VS) soit commandée selon un mode de levée partielle, dans lequel elle effectue un mouvement de levée inférieur à sa levée maximale.

14. Procédé selon la revendication 13, **caractérisé en ce que** dans ledit mode de levée partielle, ladite deuxième soupape d'admission (VS) reste dans une position fixe, correspondant à une levée partielle prédéterminée, pendant son cycle d'ouverture.

15. Procédé selon la revendication 13, **caractérisé en ce que** dans ledit mode de levée partielle de la deuxième soupape d'admission (VS), elle est commandée selon un mode *d'ouverture tardive,* dans lequel elle est ouverte avec un retard par rapport au début du cycle de levée déterminé par le profil d'une came d'actionnement respective.

16. Procédé selon la revendication 15, **caractérisé en ce que** dans ledit mode *d'ouverture tardive,* ladite deuxième soupape d'admission (VS) est fermée à nouveau conjointement avec la première soupape d'admission (VT) à la fin du cycle de levée provoqué par le profil de la came d'actionnement respective.

17. Procédé selon la revendication 13, **caractérisé en ce que** dans ledit mode de levée partielle de la deuxième soupape d'admission (VS), cette soupape est commandée selon un mode *multi-levée,* dans lequel elle est partiellement ouverte et fermée à nouveau complètement plusieurs fois pendant un même cycle de levée d'une came d'actionnement respective.

18. Procédé selon la revendication 13, **caractérisé en ce que** dans ledit mode de levée partielle de la deuxième soupape d'admission (VS), elle est commandée selon un mode de *fermeture retardée,* dans lequel elle est partiellement ouverte et fermée à nouveau complètement avec un retard par rapport à la fin d'un cycle de levée d'une came d'actionnement respective.

19. Procédé selon la revendication 12, **caractérisé en ce que** dans les étapes où seule ladite première soupape d'admission (VT) associée au conduit d'admission configuré pour générer un mouvement de *tourbillon transversal,* est ouverte, ladite première soupape d'admission (VT) est empêchée d'avoir une levée supérieure à une limite maximale prédéterminée.

20. Procédé selon la revendication 12, **caractérisé en ce que** lorsque seule la première soupape d'admission (VT) est ouverte, l'instant de début d'ouverture de cette soupape est modifié par rapport au début du cycle de levée d'une came d'actionnement respective.

21. Procédé selon la revendication 12, **caractérisé en ce que**, lorsque seule la première soupape d'admission (VT) est ouverte, cette soupape est ouverte lorsque le piston d'un cylindre respectif du moteur a déjà une vitesse déterminée et/ou a parcouru une distance prédéterminée, par exemple sur un tiers de sa course d'admission totale.

22. Moteur selon la revendication 1, dans lequel les actionneurs hydrauliques (21) des deux soupapes d'admission ne sont pas identiques entre eux, de sorte que lorsque les deux soupapes d'admission sont actionnées selon un mode classique dans lequel les deux soupapes sont ouvertes avec une variation de levée correspondant au profil de came, elles suivent des lois de mouvement qui sont différentes l'une de l'autre.
